# EUROPEAN PATENT APPLICATION

(11) **EP 4 102 621 A1**
(43) Date of publication of application: **14.12.2022**
(21) Application number: 21750629.4
(22) Date of filing: 29.01.2021
(51) Int. Cl.: H01M 50/10, B32B 7/025, B32B 27/00, H01G 11/78, H01M 10/052, H01M 10/0562

(54) **CLADDING FOR POWER STORAGE DEVICE AND POWER STORAGE DEVICE IN WHICH SAME IS USED**

(30) Priority: 07.02.2020 JP 2020019592; 01.06.2020 JP 2020095427; 01.09.2020 JP 2020146684
(71) Applicant: TOPPAN INC., Tokyo 110-0016 (JP)
(72) Inventor: MURAKI Takuya, Tokyo 110-0016 (JP)
(74) Representative: Hoffmann Eitle
(86) International application number: PCT/JP2021/003334
(87) International publication number: WO 2021/157489

(57) **Abstract**

A power storage device packaging material according to an aspect of the present disclosure is a power storage device packaging material including at least a substrate layer, an outer adhesive layer, a barrier layer, and a sealant layer in this order, wherein a difference in linear expansion coefficient at 20 to 150°C between the substrate layer and the barrier layer is 20×10⁻⁶/°C or less in both an MD direction and a TD direction.

## Description

### [Technical Field]

The present disclosure relates to a power storage device packaging material and a power storage device including the same.

### [Background Art]

Known power storage devices include secondary batteries such as lithium-ion batteries, nickel hydride batteries, and lead batteries, and electrochemical capacitors such as electric double layer capacitors. As mobile devices have been miniaturized or limited in installation space, there have been demands for further miniaturized power storage devices. Accordingly, lithium-ion batteries having high energy density have been attracting attention. Conventional packaging materials for lithium-ion batteries have been metal cans, but multilayer films have been increasingly used due to their light weight, high heat dissipation, and low production cost.

Lithium-ion batteries including such a multilayer film as a packaging material are referred to as laminated lithium-ion batteries. The packaging material covers battery contents (a positive electrode, a separator, a negative electrode, an electrolyte solution, etc.) to prevent moisture from penetrating into the lithium-ion batteries. A laminated lithium-ion battery is produced, for example, by forming a recess in a portion of the packaging material by cold forming, placing battery contents in the recess, folding the remaining part of the packaging material, and sealing the edge portions by heat sealing (see, for example, PTL 1).

### [Citation List]

### [Patent Literature]

[PTL 1] JP 2013-101765 A

### [Summary of the Invention]

### [Technical Problem]

Power storage devices referred to as all-solid-state batteries are under research and development as next-generation batteries replacing lithium-ion batteries. All-solid-state batteries are characterized as including a solid electrolyte instead of an organic electrolyte solution as an electrolyte material. Lithium-ion batteries cannot be used under temperature conditions higher than the boiling temperature of the electrolyte solution (approximately 80°C). However, all-solid-state batteries can be used under temperature conditions higher than 100°C, and can enhance the conductivity of lithium ions when the batteries are operated under high temperature conditions (e.g., 100 to 150°C). Thus, all-solid-state batteries, which can be used at high temperature, require less space and cost for a cooling system for cooling the batteries.

### (First object)

However, when a multilayer film as described above is used as a packaging material to produce a laminated all-solid-state battery, and the obtained all-solid-state battery is operated in a high temperature environment, in some cases, separation occurs between a substrate layer and a metal foil layer (barrier layer) of the packaging material, leading to a phenomenon in which the substrate layer is lifted from the metal foil layer as a base (outer layer lifting). Outer layer lifting is more likely to occur particularly at a deep-drawn portion of the packaging material, which is stretched during forming. The occurrence of outer layer lifting in a portion of the packaging material causes a reduction in strength at that portion, and this may cause breakage or the like of the packaging material.

Not only all-solid-state batteries but also other power storage devices such as lithium ion capacitors that can be used at high temperature are under development. Thus, packaging materials used for power storage devices need to be configured such that outer layer lifting is less likely to occur even when the power storage devices are used in a high temperature environment.

The present disclosure has been made in view of the above problem, and a first object of the present disclosure is to provide a power storage device packaging material in which lifting of a substrate layer from a barrier layer is less likely to occur in a high temperature environment (e.g., 150°C), and a power storage device including the power storage device packaging material.

### (Second object)

When a power storage device is used or stored in a high temperature environment, the power storage device may be deformed, and may not recover from deformation even after the room temperature environment is restored. Deformation of the power storage device not only leads to poor appearance, but also may make it difficult to use the power storage device as originally intended.

The present disclosure has been made in view of such technical circumstances, and a second object of the present disclosure is to provide a power storage device and an exterior material for the power storage device, in which deformation is less likely to occur even after being used or stored for a long period of time in a high temperature environment.

### (Third object)

The present inventor has found a problem in that when a multilayer film as described above is used as a packaging material to produce a laminated all-solid-state battery, and the obtained all-solid-state battery is operated in a high temperature environment, the insulating properties of the packaging material are deteriorated, and dielectric breakdown due to voltage application is more likely to occur. Existing lithium-ion batteries include an electrolyte solution and are thus not used at high temperature. Therefore, the above problem of the packaging material used in a high temperature environment has not been recognized. For all-solid-state batteries, high voltage output from bipolar batteries is under consideration, thus increasing the importance of the insulating properties of the packaging material.

Not only all-solid-state batteries but also other power storage devices such as lithium ion capacitors that can be used at high temperature are under development. Thus, packaging materials used for power storage devices need to be configured such that dielectric breakdown is less likely to occur even when the power storage devices are used in a high temperature environment.

The present disclosure has been made in view of the above problem, and a third object of the present disclosure is to provide a power storage device packaging material in which dielectric breakdown is less likely to occur in a high temperature environment (e.g., 150°C), and a power storage device including the power storage device packaging material.

### [Solution to Problem]

In order to achieve the first object, the present disclosure provides a power storage device packaging material including at least a substrate layer, an outer adhesive layer, a barrier layer, and a sealant layer in this order, wherein a difference in linear expansion coefficient at 20 to 150°C between the substrate layer and the barrier layer is 20×10⁻⁶/°C or less in both an MD direction and a TD direction.

When a packaging material is exposed to a high temperature environment, a non-negligible level of thermal expansion occurs in a substrate layer and a barrier layer of the packaging material. The present inventors have found that in such a case, if there is a large difference in the amount of thermal expansion between the substrate layer and the barrier layer, a shearing force is applied to an outer adhesive layer adhering the substrate layer to the barrier layer and causes cohesive failure or interfacial peeling of the outer adhesive layer, leading to separation between the substrate layer and the barrier layer (outer layer lifting). The present inventors have found that the above problem can be solved by controlling the difference in linear expansion coefficient between the substrate layer and the barrier layer, which is an indicator of thermal expansion of the substrate layer and the barrier layer, to be in a specific range. Thus, in the packaging material of the present disclosure, the difference in linear expansion coefficient at 20 to 150°C between the substrate layer and the barrier layer is 20×10⁻⁶/°C or less in both the MD direction and the TD direction. This makes it possible to prevent the occurrence of lifting of the substrate layer from the barrier layer in a high temperature environment (e.g., 150°C).

The power storage device packaging material may be configured such that the barrier layer is an aluminum foil. In such a case, the packaging material can have higher formability, and lower material cost is achieved. When the barrier layer is composed of an aluminum foil, the difference in linear expansion coefficient between the substrate layer and the barrier layer is easily controlled.

The power storage device packaging material may be configured such that the linear expansion coefficient at 20 to 150°C of the substrate layer is -7×10⁻⁶/°C or more and 53×10⁻⁶/°C or less in both the MD direction and the TD direction. When the linear expansion coefficient of the substrate layer is in the above range, the difference in linear expansion coefficient between the substrate layer and the barrier layer is more likely to be small, and the occurrence of outer layer lifting in a high temperature environment is more likely to be prevented. When the barrier layer is an aluminum foil, which has a linear expansion coefficient of approximately 23×10⁻⁶/°C, by controlling the linear expansion coefficient of the substrate layer to be in the above range, it is possible to allow the difference in linear expansion coefficient between the substrate layer and the aluminum foil to be small.

The power storage device packaging material may be configured such that the substrate layer is a biaxially stretched semi-aromatic polyamide film. A material typically used for a substrate layer of a power storage device packaging material is a nylon (Ny) film (linear expansion coefficient: 72 to 80×10⁻⁶/°C), a polyethylene terephthalate (PET) film (linear expansion coefficient: 65 to 76×10⁻⁶/°C), or a PET/Ny film obtained by laminating or coextruding these films, and the films are biaxially stretched to obtain formability. However, although these films have good formability, there is a large difference in linear expansion coefficient between the films and a metal foil layer (e.g., an aluminum foil), and outer layer lifting is more likely to occur in a high temperature environment. On the other hand, a biaxially stretched semi-aromatic polyamide film allows the difference in linear expansion coefficient between the film and a metal foil layer (e.g., an aluminum foil) to be small and is more likely to prevent the occurrence of outer layer lifting in a high temperature environment, and allows the packaging material to have good formability.

The power storage device packaging material may be configured such that the outer adhesive layer is a layer composed of a polyester urethane adhesive. Furthermore, the power storage device packaging material may be configured such that the outer adhesive layer has a thickness of 1 to 10 µm. When the outer adhesive layer is a layer composed of a polyester urethane adhesive, the outer adhesive layer can have higher heat resistance, and the occurrence of outer layer lifting in a high temperature environment is more likely to be prevented. When the thickness of the outer adhesive layer is 1 µm or more, the outer adhesive layer is more likely to have high adhesive strength, and a shearing force generated by thermal expansion of the substrate layer and the barrier layer in a high temperature environment is more likely to be reduced. When the thickness of the outer adhesive layer is 10 µm or less, the packaging material can have higher formability, and the occurrence of outer layer lifting in a high temperature environment is more likely to be prevented.

The power storage device packaging material may be used for a solid-state battery.

The present disclosure provides a power storage device including a power storage device body, a current output terminal that extends from the power storage device body, and the power storage device packaging material of the present disclosure, the power storage device packaging material sandwiching the current output terminal and housing the power storage device body. The power storage device may be an all-solid-state battery.

### (Second aspect)

In order to achieve the second object, the present disclosure provides a power storage device packaging material including at least a substrate layer, an outer adhesive layer, a barrier layer, and a sealant layer in this order, wherein the substrate layer has a single-layer structure, and when a sample with a length of 20 mm and a width of 10 mm is prepared from the substrate layer, and the sample is subjected to a creep test in which a constant load of 5 N is continuously applied to the sample in a 150°C environment for 3 hours, an amount of elongation of the sample in an MD direction and an amount of elongation of the sample in a TD direction are both 3 mm or less.

When a power storage device is used or stored in a high temperature environment, the power storage device expands due to various causes. For example, the battery contents may expand. Alternatively, the residual gas remaining in the power storage device may expand. In a battery including a sulfide solid electrolyte, moisture penetrating from the outside into the battery reacts with the solid electrolyte to generate gas such as H₂S gas, and the gas causes expansion of the battery.

Thus, when a power storage device is used or stored in a high temperature environment, the power storage device expands, and an internal pressure caused by the expansion is applied to a packaging material of the power storage device. The present inventors have found that in a high temperature environment, the strength of the packaging material is reduced, and thus the packaging material expands outward, and does not recover from deformation even after the packaging material environment returns to room temperature. The present inventors have found that the above problem can be solved by controlling the amount of elongation of the substrate layer in a creep test to be in a specific range. Thus, in the packaging material of the present disclosure, when a sample with a length of 20 mm and a width of 10 mm is prepared from the substrate layer and the sample is subjected to a creep test in which a constant load of 5 N is continuously applied to the sample in a 150°C environment for 3 hours, and the amount of elongation of the sample in the MD direction and the amount of elongation of the sample in the TD direction are both 3 mm or less, deformation of the power storage device can be prevented even after the power storage device is used or stored in a high temperature environment for a long period of time.

The power storage device packaging material may be configured such that a difference between the amount of elongation of the sample in the MD direction and the amount of elongation of the sample in the TD direction is 2 mm or less. If elongation of the sample is more likely to occur in one of the MD direction and the TD direction, stress is more likely to be concentrated in the one of the MD direction and the TD direction. When the difference in the amount of elongation of the sample in the MD direction and the amount of elongation of the sample in the TD direction is 2 mm or less, such concentration of stress can be prevented.

The power storage device packaging material may be configured such that the substrate layer is a biaxially stretched film. As described above, laminated lithium-ion batteries have a recess in a portion of the packaging material formed by cold forming; thus, the packaging material is required to have formability that allows the substrate layer to be formed by cold forming. When the substrate layer is a biaxially stretched film, the packaging material exhibits good cold formability.

The power storage device packaging material may be configured such that the substrate layer is composed of a semi-aromatic polyamide.

The power storage device packaging material may be configured such that the outer adhesive layer is composed of a polyester polyurethane. In such a case, the substrate layer can be firmly adhered to the barrier layer, for example, in a high temperature environment of 150°C or more.

### (Third aspect)

In order to achieve the third object, the present disclosure provides a power storage device packaging material having a structure in which at least a substrate layer, an outer adhesive layer, a barrier layer, and a sealant layer are laminated in this order, wherein a ratio between a volume resistivity in a 23°C environment and a volume resistivity in a 150°C environment (a volume resistivity in a 23°C environment/a volume resistivity in a 150°C environment) of the substrate layer is 1 × 10° to 1 × 10³.

In the power storage device packaging material, when the ratio between the volume resistivity in a 23°C environment and the volume resistivity in a 150°C environment (the volume resistivity in a 23°C environment/the volume resistivity in a 150°C environment) (hereinafter also referred to as a "resistance change ratio") of the substrate layer is in the above range, it is possible to prevent a rapid reduction in the volume resistivity of the substrate layer due to an increase in temperature, thus preventing the occurrence of dielectric breakdown in a high temperature environment (e.g., 150°C). If the volume resistivity of the substrate layer is rapidly reduced due to an increase in temperature, in a packaging material designed to have sufficient insulating properties at a temperature equal to or less than the boiling point temperature of an electrolyte solution of a conventional lithium-ion battery (approximately 80°C), dielectric breakdown occurs when the packaging material is used in a high temperature environment (e.g., at 100 to 150°C). When the resistance change ratio of the substrate layer is in the above range, a packaging material designed to have sufficient insulating properties at approximately 80°C or less can be used in a high temperature environment without the occurrence of dielectric breakdown.

In the power storage device packaging material, the volume resistivity of the substrate layer in an environment at 23°C of may be 1 × 10¹³ Ω·m or more. When the volume resistivity of the substrate layer in a 23°C environment is in the above range and the resistance change ratio of the substrate layer is in the range described above, it is possible to more sufficiently prevent the occurrence of dielectric breakdown both in the case where the packaging material is used at approximately 80°C or less and in the case where the packaging material is used in a high temperature environment (e.g., at 100 to 150°C).

The power storage device packaging material may be configured such that the volume resistivity of the substrate layer in a 150°C environment is 1 × 10¹² Ω·m or more. When the volume resistivity of the substrate layer in a 150°C environment is in the above range and the resistance change ratio of the substrate layer is in the range described above, it is possible to more sufficiently prevent the occurrence of dielectric breakdown both in the case where the packaging material is used at approximately 80°C or less and in the case where the packaging material is used in a high temperature environment (e.g., at 100 to 150°C).

The power storage device packaging material may be configured such that the substrate layer has a thickness of 35 µm or less, and a value obtained by multiplying the volume resistivity of the substrate layer in a 150°C environment by the thickness of the substrate layer is 5 × 10¹³ (Ω·m × µm) or more. When the thickness of the substrate layer is in the above range, it is possible to prevent the occurrence of curling after forming in the packaging material, thereby preventing a reduction in ease of handling of the packaging material during heat sealing in a later step. When the value obtained by multiplying the thickness of the substrate layer by the volume resistivity of the substrate layer in a 150°C environment is in the above range, it is possible to more sufficiently prevent the occurrence of dielectric breakdown both in the case where the packaging material is used at approximately 80°C or less and in the case where the packaging material is used in a high temperature environment (e.g., at 100 to 150°C).

The power storage device packaging material may be configured such that the substrate layer is a biaxially stretched film. When the substrate layer is a biaxially stretched film, the power storage device packaging material can have higher formability.

The power storage device packaging material may be configured such that the substrate layer is a semiaromatic polyamide film. In a semi-aromatic polyamide film, the resistance change ratio, the volume resistivity in a 23°C environment, and the volume resistivity in a 150°C environment are easily controlled to be in the specific range described above. Thus, when the substrate layer is a semi-aromatic polyamide film, it is possible to more sufficiently prevent the occurrence of dielectric breakdown both in the case where the packaging material is used at approximately 80°C or less and in the case where the packaging material is used in a high temperature environment (e.g., at 100 to 150°C).

The power storage device packaging material may be configured such that the outer adhesive layer is a layer composed of a polyester urethane adhesive. When the outer adhesive layer is composed of a polyester urethane adhesive, the outer adhesive layer can maintain high adhesive strength in a high temperature environment (e.g., 150°C).

The power storage device packaging material may be used for a solid-state battery.

The present disclosure provides a power storage device including a power storage device body, a current output terminal that extends from the power storage device body, and the power storage device packaging material of the present disclosure, the power storage device packaging material sandwiching the current output terminal and housing the power storage device body. The power storage device may be an all-solid-state battery.

### [Advantageous Effects of the Invention]

### (First effect)

The present disclosure provides a power storage device packaging material in which lifting of a substrate layer from a barrier layer is less likely to occur in a high temperature environment (e.g., 150°C), and a power storage device including the power storage device packaging material.

### (Second effect)

The present disclosure provides a power storage device in which deformation is less likely to occur even after the power storage device is used or stored in a high temperature environment for a long period of time, and a power storage device packaging material for the power storage device.

### (Third effect)

The present disclosure provides a power storage device packaging material in which dielectric breakdown is less likely to occur in a high temperature environment (e.g., 150°C), and a power storage device including the power storage device packaging material.

### [Brief Description of the Drawings]

Fig. 1 is a schematic cross-sectional view of a power storage device packaging material according to an embodiment of the present disclosure.
Fig. 2 is a schematic cross-sectional view of a power storage device packaging material according to an embodiment of the present disclosure.
Fig. 3 is a perspective view of a power storage device according to an embodiment of the present disclosure.

### [Description of the Embodiments]

Preferred embodiments of the present disclosure will be described below in detail with reference to the drawings as appropriate. In the drawings, the same or corresponding components are denoted by the same reference numerals, and redundant description is omitted. Furthermore, dimensional ratios in the drawings are not limited to the ratios shown in the drawings.

### [Power storage device packaging material]

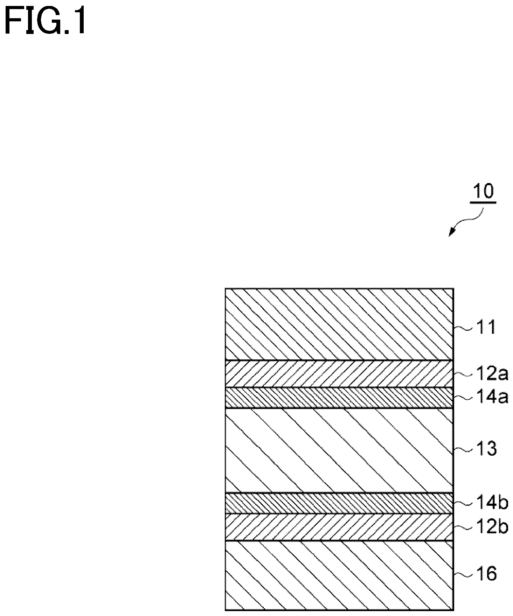

Fig. 1 is a schematic cross-sectional view of an embodiment of a power storage device packaging material according to the present disclosure. As shown in Fig. 1, a packaging material (power storage device packaging material) 10 of the present embodiment is a laminate including a substrate layer 11, an outer adhesive layer 12a provided on one surface of the substrate layer 11, a barrier layer 13 provided on the side of the outer adhesive layer 12a facing away from the substrate layer 11 and having a first anticorrosion treatment layer 14a and a second anticorrosion treatment layer 14b on the respective surfaces thereof, an inner adhesive layer 12b provided on the side of the barrier layer 13 facing away from the outer adhesive layer 12a, and a sealant layer 16 provided on the side of the inner adhesive layer 12b facing away from the barrier layer 13. The first anticorrosion treatment layer 14a is provided on the surface of the barrier layer 13 facing the substrate layer 11, and the second anticorrosion treatment layer 14b is provided on the surface of the metal barrier layer 13 facing the sealant layer 16. In the packaging material 10, the substrate layer 11 is the outermost layer, and the sealant layer 16 is the innermost layer. That is, the packaging material 10 is used so that the substrate layer 11 faces the outside of the power storage device and the sealant layer 16 faces the inside of the power storage device.

In the packaging material 10 according to the first aspect of the present embodiment, a difference in linear expansion coefficient at 20 to 150°C between the substrate layer 11 and the barrier layer 13 is 20×10⁻⁶/°C or less in both the MD direction and the TD direction. Herein, the linear expansion coefficient of the barrier layer 13 may be measured using a barrier layer 13 that is not provided with the first anticorrosion treatment layer 14a and the second anticorrosion treatment layer 14b or using a barrier layer 13 that is provided with the first anticorrosion treatment layer 14a and the second anticorrosion treatment layer 14b. The first anticorrosion treatment layer 14a and the second anticorrosion treatment layer 14b have an extremely small thickness as compared with the barrier layer 13; thus, the influence of the presence of the first anticorrosion treatment layer 14a and the second anticorrosion treatment layer 14b on a measurement value of the linear expansion coefficient of the barrier layer 13 is substantially negligible. In the present disclosure, the linear expansion coefficient can be measured using a thermomechanical analyzer (TMA). Specific measurement conditions are as shown in the examples.

In the packaging material 10 according to the first aspect of the present embodiment, the difference in linear expansion coefficient at 20 to 150°C between the substrate layer 11 and the barrier layer 13 is more preferably 15×10⁻⁶/°C or less in both the MD direction and the TD direction, and still more preferably 10×10⁻⁶/°C or less, because in such a case, the occurrence of lifting of the substrate layer 11 from the barrier layer 13 in a high temperature environment (e.g., 150°C) is more likely to be prevented.

The layers constituting the packaging material 10 will be specifically described below.

### <Substrate layer 11>

The substrate layer 11 allows the packaging material 10 to have formability and insulating properties. Furthermore, the substrate layer 11 allows the packaging material 10 to have heat resistance in a sealing process during production of the power storage device, and prevents the possible occurrence of pinholes during forming processing and distribution. In packaging materials for large power storage devices in particular, the substrate layer 11 can also allow the packaging materials to have scratch resistance, chemical resistance, insulating properties, and the like. Furthermore, the substrate layer 11 has a role of withstanding internal pressure generated when the power storage device is used or stored in a high temperature environment, and preventing deformation of the power storage device after use or storage.

### [Substrate layer constituting packaging material according to first aspect]

The substrate layer 11 is preferably composed of a resin film made of a resin having insulating properties.

The substrate layer 11 constituting the packaging material according to the first aspect is required to have a linear expansion coefficient close to that of the barrier layer 13 so that the difference in linear expansion coefficient between the substrate layer 11 and the barrier layer 13 is 20×10⁻⁶/°C or less. Furthermore, the substrate layer 11 preferably ensures good formability. From the viewpoint of satisfying these requirements, the substrate layer 11 is preferably composed of a semi-aromatic polyamide film.

A semi-aromatic polyamide constituting the semi-aromatic polyamide film is obtained by copolymerizing a dicarboxylic acid component with a diamine component, and the semi-aromatic polyamide contains an aromatic group in the dicarboxylic acid component or the diamine component. A semi-aromatic polyamide has high heat resistance. Furthermore, a semi-aromatic polyamide can ensure good formability, and has good dimensional stability. When a semi-aromatic polyamide film is used as the substrate layer 11, it is possible to form a power storage device packaging material in which the difference in linear expansion coefficient between the substrate layer 11 and the barrier layer 13 is easily controlled to be 20×10⁻⁶/°C or less and lifting of the substrate layer 11 from the barrier layer 13 is less likely to occur in a high temperature environment (e.g., 150°C).

The dicarboxylic acid component constituting the semi-aromatic polyamide preferably contains terephthalic acid as a main component. Examples of components of the dicarboxylic acid component other than terephthalic acid include aliphatic dicarboxylic acids such as oxalic acid, malonic acid, succinic acid, glutaric acid, adipic acid, sebacic acid, dodecanedioic acid, tetradecanedioic acid, and octadecanedioic acid; and aromatic dicarboxylic acids such as 1,4-naphthalenedicarboxylic acid, 1,3-naphthalenedicarboxylic acid, 1,2-naphthalenedicarboxylic acid, and isophthalic acid. These may be used singly or in combination of two or more. The ratio of terephthalic acid in the dicarboxylic acid component is preferably 60 to 100 mol%.

The diamine component constituting the semi-aromatic polyamide preferably contains an aliphatic diamine having 4 to 15 carbon atoms as a main component. Examples of the aliphatic diamine having 4 to 15 carbon atoms include 1,4-butanediamine, 1,5-pentanediamine, 1,6-hexanediamine, 1,7-heptanediamine, 1,8-octanediamine, 1,9-nonanediamine, 2-methyl-1,8-octanediamine, 4-methyl-1,8-octanediamine, 1,10-decanediamine, 1,11-undecanediamine, 1,12-dodecanediamine, 1,13-tridecanediamine, 1,14-tetradecanediamine, and 1,15-pentadecanediamine. These may be used singly or in combination of two or more.

The semi-aromatic polyamide may be copolymerized with lactams such as ε-caprolactam, ζ-enantholactam, η-caprolactam, and ω-laurolactam.

The semi-aromatic polyamide preferably has a melting point (Tm) higher than that of the sealant layer 16 by 30°C or more, from the viewpoint of heat resistance during heat sealing. The melting point of the semi-aromatic polyamide may be, for example, 280 to 350°C. The type and copolymerization ratio of monomers constituting the semi-aromatic polyamide are preferably adjusted so that the melting point of the semi-aromatic polyamide is in the above range.

The resin film constituting the substrate layer 11 such as the semi-aromatic polyamide film may be a stretched film or an unstretched film, but is preferably a biaxially stretched film because in such a case, good formability is more likely to be obtained. The biaxially stretched film may be obtained, for example, by sequential biaxial stretching, tubular biaxial stretching, simultaneous biaxial stretching, or the like. The biaxially stretched film is preferably obtained by simultaneous biaxial stretching or tubular biaxial stretching because in such a case, the difference between the linear expansion coefficient of the substrate layer 11 in the MD direction and the linear expansion coefficient of the substrate layer 11 in the TD direction is more likely to be small, and the difference in linear expansion coefficient between the substrate layer 11 and the barrier layer 13 is more likely to be small in both the MD direction and the TD direction.

The substrate layer 11 may be a single-layer film composed of a single type of resin film, or a laminated film composed of two or more types of resin films.

The linear expansion coefficient at 20 to 150°C of the substrate layer 11 in both the MD direction and the TD direction is preferably -7×10⁻⁶/°C or more and 53×10⁻⁶/°C or less, more preferably 3×10⁻⁶/°C or more and 43×10⁻⁶/°C or less, and still more preferably 13×10⁻⁶/°C or more and 33×10⁻⁶/°C or less, because in such a case, the difference in linear expansion coefficient between the substrate layer 11 and the barrier layer is more likely to be small, and the occurrence of outer layer lifting in a high temperature environment is more likely to be prevented.

The difference between the linear expansion coefficient at 20 to 150°C of the substrate layer 11 in the MD direction and the linear expansion coefficient at 20 to 150°C of the substrate layer 11 in the TD direction is preferably 20×10⁻⁶/°C or less, and more preferably 10×10⁻⁶/°C or less, because in such a case, the difference in linear expansion coefficient between the substrate layer 11 and the barrier layer 13 is more likely to be small in both the MD direction and the TD direction.

The substrate layer 11 preferably has a thickness of 5 to 50 µm, more preferably 6 to 40 µm, still more preferably 10 to 30 µm, and particularly preferably 12 to 30 µm. When the thickness of the substrate layer 11 is 5 µm or more, the power storage device packaging material 10 tends to have higher pinhole resistance and better insulating properties. If the thickness of the substrate layer 11 exceeds 50 µm, the total thickness of the power storage device packaging material 10 becomes large, and this may require a reduction in the electric capacity of the battery, which is not preferable.

### [Substrate layer constituting packaging material according to second aspect]

The substrate layer 11 allows the packaging material to have heat resistance in a sealing process during production of the power storage device, and prevents the possible occurrence of pinholes during forming processing and distribution. Furthermore, the substrate layer 11 can withstand internal pressure generated when the power storage device is used or stored in a high temperature environment, and prevent deformation of the power storage device after use or storage. Thus, the substrate layer 11 is configured as follows. Specifically, the substrate layer 11 constituting the packaging material according to the second aspect is required to have a single-layer structure. Furthermore, when from the substrate layer 11 having a single-layer structure without being laminated on another layer, a sample with a length of 20 mm and a width of 10 mm is prepared by setting the longitudinal direction to the machine direction (MD direction) during film formation and setting the width direction to the direction (TD direction) perpendicular to the machine direction, and the sample is subjected to a creep test in which a constant load of 5 N is continuously applied to the sample in a 150°C environment for 3 hours, the amount of elongation of the sample in the longitudinal direction (the amount of elongation of the sample in the MD direction) is required to be 3 mm or less.

When a sample with a length of 20 mm and a width of 10 mm is similarly prepared by setting the longitudinal direction to the TD direction and setting the width direction to the MD direction, and the sample is subjected to a creep test in which a constant load of 5 N is continuously applied to the sample in a 150°C environment for 3 hours, the amount of elongation of the sample in the longitudinal direction (the amount of elongation of the sample in the TD direction) is required to be 3 mm or less.

As described above, in the creep test, the amount of elongation of the sample in the MD direction and the amount of elongation of the sample in the TD direction are both 3 mm or less; thus, even when the power storage device is used or stored in a high temperature environment, the substrate layer 11 can withstand the expansion pressure of the power storage device, and prevent deformation of the power storage device. As a matter of course, deformation of the power storage device is also prevented after the power storage device is returned to a room temperature environment.

The difference in the amount of elongation of the sample in the MD direction and the amount of elongation of the sample in the TD direction in the creep test is preferably 2 mm or less. When the difference in the amount of elongation of the sample in the MD direction and the amount of elongation of the sample in the TD direction is 2 mm or less, it is possible to prevent concentration of expansion pressure in one of the MD direction and the TD direction, thus further preventing deformation of the power storage device.

The substrate layer 11 is preferably a film composed of a semi-aromatic polyamide. A semi-aromatic polyamide is a polyamide containing both an aromatic monomer and an aliphatic monomer as monomers, and is characterized as having higher heat resistance than an aliphatic polyamide containing only an aliphatic monomer. The aromatic monomer may be terephthalic acid, hexamethylene isophthalamide, 2-methylpentamethylene terephthalamide, or the like. Examples of the semi-aromatic polyamide containing such an aromatic monomer as a monomer include Uniamide Ex manufactured by Unitika Ltd., HT-nylon manufactured by Toray Industries, Inc., Ariene manufactured by Mitsui Chemicals, Inc., and Ultramid manufactured by BASF.

The substrate layer 11 is preferably a biaxially stretched film. When the substrate layer is a biaxially stretched film, the packaging material exhibits good cold formability, and thus can be preferably used, for example, as a packaging material for a laminated lithium-ion battery.

The substrate layer 11 may have the same thickness as the substrate layer constituting the packaging material according to the first or third aspect.

### [Substrate layer constituting packaging material according to third aspect]

In the substrate layer 11 constituting the packaging material according to the third aspect, the ratio between the volume resistivity in a 23°C environment and the volume resistivity in a 150°C environment (the volume resistivity in a 23°C environment/the volume resistivity in a 150°C environment) is 1 × 10⁰ to 1 × 10³. The ratio (resistance change ratio) is preferably 1 × 10⁰ to 5 × 10², and more preferably 1 × 10⁰ to 1 × 10². When the resistance change ratio of the substrate layer 11 is not more than the upper limit, it is possible to prevent a rapid reduction in the volume resistivity of the substrate layer 11 due to an increase in temperature, thus preventing the occurrence of dielectric breakdown in a high temperature environment (e.g., 150°C).

The volume resistivity in a 23°C environment of the substrate layer 11 is preferably 1 × 10¹³ Ω·m or more, more preferably 5 × 10¹³ Ω·m or more, and still more preferably 1 × 10¹⁴ Ω·m or more. The upper limit of the volume resistivity of the substrate layer 11 in a 23°C environment is not particularly limited, but may be, for example, 1 × 10¹⁶ Ω·m or less, 5 × 10¹⁵ Ω·m or less, or 1 × 10¹⁵ Ω·m or less. When the volume resistivity of the substrate layer 11 in a 23°C environment is not less than the lower limit, it is possible to more sufficiently prevent the occurrence of dielectric breakdown both in the case where the packaging material is used at approximately 80°C or less and in the case where the packaging material is used in a high temperature environment (e.g., at 100 to 150°C).

The volume resistivity of the substrate layer 11 in a 150°C environment is preferably 1 × 10¹² Ω·m or more, more preferably 5 × 10¹² Ω·m or more, and still more preferably 1 × 10¹³ Ω·m or more. The upper limit of the volume resistivity in a 150°C environment of the substrate layer 11 is not particularly limited, but may be, for example, 1 × 10¹⁵ Ω·m or less, 5 × 10¹⁴ Ω·m or less, or 1 × 10¹⁴ Ω·m or less. When the volume resistivity of the substrate layer 11 in a 150°C environment is not less than the lower limit, it is possible to more sufficiently prevent the occurrence of dielectric breakdown both in the case where the packaging material is used at approximately 80°C or less and in the case where the packaging material is used in a high temperature environment (e.g., at 100 to 150°C).

The volume resistivity of the substrate layer 11 can be measured in accordance with JIS K 6911 under conditions of a temperature of 23°C or 150°C, a relative humidity of less than 20%, and a voltage of 100 V.

The substrate layer 11 is preferably composed of a resin film made of a resin having insulating properties.

The substrate layer 11 is preferably composed of a semi-aromatic polyamide film from the viewpoint of satisfying the conditions for the resistance change ratio and the volume resistivity described above and ensuring good formability.

A semi-aromatic polyamide constituting the semi-aromatic polyamide film is obtained by copolymerizing a dicarboxylic acid component with a diamine component, and the semi-aromatic polyamide contains an aromatic group in the dicarboxylic acid component or the diamine component. A semi-aromatic polyamide has high heat resistance. Furthermore, a semi-aromatic polyamide can ensure good formability, and has good dimensional stability. When a semi-aromatic polyamide film is used as the substrate layer 11, it is possible to form a power storage device packaging material in which the conditions for the resistance change ratio and the volume resistivity described above are more likely to be satisfied and dielectric breakdown is less likely to occur in a high temperature environment (e.g., 150°C).

The dicarboxylic acid component constituting the semi-aromatic polyamide preferably contains terephthalic acid as a main component. Examples of components of the dicarboxylic acid component other than terephthalic acid include aliphatic dicarboxylic acids such as oxalic acid, malonic acid, succinic acid, glutaric acid, adipic acid, sebacic acid, dodecanedioic acid, tetradecanedioic acid, and octadecanedioic acid; and aromatic dicarboxylic acids such as 1,4-naphthalenedicarboxylic acid, 1,3-naphthalenedicarboxylic acid, 1,2-naphthalenedicarboxylic acid, and isophthalic acid. These may be used singly or in combination of two or more. The ratio of terephthalic acid in the dicarboxylic acid component is preferably 60 to 100 mol%.

The diamine component constituting the semi-aromatic polyamide preferably contains an aliphatic diamine having 4 to 15 carbon atoms as a main component. Examples of the aliphatic diamine having 4 to 15 carbon atoms include 1,4-butanediamine, 1,5-pentanediamine, 1,6-hexanediamine, 1,7-heptanediamine, 1,8-octanediamine, 1,9-nonanediamine, 2-methyl-1,8-octanediamine, 4-methyl-1,8-octanediamine, 1,10-decanediamine, 1,11-undecanediamine, 1,12-dodecanediamine, 1,13-tridecanediamine, 1,14-tetradecanediamine, and 1,15-pentadecanediamine. These may be used singly or in combination of two or more.

The semi-aromatic polyamide may be copolymerized with lactams such as ε-caprolactam, ζ-enantholactam, η-caprolactam, and ω-laurolactam.

The semi-aromatic polyamide preferably has a melting point (Tm) higher than that of the sealant layer 16 by 30°C or more, from the viewpoint of heat resistance during heat sealing. The melting point of the semi-aromatic polyamide may be, for example, 280 to 350°C. The type and copolymerization ratio of monomers constituting the semi-aromatic polyamide are preferably adjusted so that the melting point of the semi-aromatic polyamide is in the above range.

The resin film constituting the substrate layer 11 such as the semi-aromatic polyamide film may be a stretched film or an unstretched film, but is preferably a biaxially stretched film because in such a case, good formability is more likely to be obtained. The biaxially stretched film may be obtained, for example, by sequential biaxial stretching, tubular biaxial stretching, simultaneous biaxial stretching, or the like. The biaxially stretched film is preferably obtained by simultaneous biaxial stretching or tubular biaxial stretching because in such a case, better formability is more likely to be obtained.

The substrate layer 11 may be a single-layer film composed of a single type of resin film, or a laminated film composed of two or more types of resin films.

The substrate layer 11 preferably has a glass transition temperature (Tg) of 100°C or more, more preferably 110°C or more, and still more preferably 115°C or more. When the Tg of the substrate layer 11 is 100°C or more, it is possible to more sufficiently prevent the occurrence of dielectric breakdown in the case where the packaging material is used in a high temperature environment (e.g., at 100 to 150°C). The upper limit of the Tg of the substrate layer 11 is not particularly limited, but may be, for example, 400°C or less.

The substrate layer 11 preferably has a thickness of 5 µm or more, more preferably 6 µm or more, still more preferably 10 µm or more, and particularly preferably 12 µm or more. Furthermore, the substrate layer 11 preferably has a thickness of 50 µm or less, more preferably 40 µm or less, still more preferably 35 µm or less, and particularly preferably 30 µm or less. When the thickness of the substrate layer 11 is 5 µm or more, the power storage device packaging material 10 tends to have higher pinhole resistance and better insulating properties. If the thickness of the substrate layer 11 exceeds 50 µm, the total thickness of the power storage device packaging material 10 becomes large, and this may require a reduction in the electric capacity of the battery, which is not preferable. When the thickness of the substrate layer 11 is 50 µm or less, it is possible to prevent the occurrence of curling after forming in the power storage device packaging material 10, thereby preventing a reduction in ease of handling of the power storage device packaging material 10 during heat sealing in a later step.

In the substrate layer 11, a value obtained by multiplying the volume resistivity of the substrate layer 11 in a 150°C environment by the thickness of the substrate layer 11 is preferably 5 × 10¹³ (Ω·m × µm) or more, more preferably 1 × 10¹⁴ (Ω·m × µm) or more, and still more preferably 2 × 10¹⁴ (Ω·m × µm) or more. Furthermore, the value obtained by multiplying the volume resistivity of the substrate layer 11 in a 150°C environment by the thickness of the substrate layer 11 may be 1 × 10¹⁶ (Ω·m × µm) or less, or 5 × 10¹⁵ (Ω·m × µm) or less. When this value is not less than the lower limit, it is possible to more sufficiently prevent the occurrence of dielectric breakdown both in the case where the packaging material is used at approximately 80°C or less and in the case where the packaging material is used in a high temperature environment (e.g., at 100 to 150°C).

The substrate layer constituting the packaging material according to each of the first to third aspects has been described. The substrate layer 11 may have two or more of the characteristics of the substrate layer constituting the packaging material according to the first aspect, the characteristics of the substrate layer constituting the packaging material according to the second aspect, and the characteristics of the substrate layer constituting the packaging material according to the third aspect.

### <Outer adhesive layer 12a>

The outer adhesive layer 12a adheres the substrate layer 11 to the barrier layer 13. Specific examples of the material for forming the outer adhesive layer 12a include a polyurethane resin obtained by allowing an isocyanate compound having two or more functional groups (a polyfunctional isocyanate compound) to act on a base resin such as a polyester polyol, a polyether polyol, an acrylic polyol, a carbonate polyol, or the like. Of polyurethane resins, a polyester urethane resin containing a polyester polyol and an isocyanate compound having two or more functional groups is preferable because such a polyester urethane resin makes it possible to firmly adhere the substrate layer 11 to the barrier layer 13, for example, in a high temperature environment of 150°C or more, is more likely to prevent the occurrence of outer layer lifting in a high temperature environment, and more likely to prevent a reduction in peel strength in a high temperature environment.

The various polyols described above can be used singly or in combination of two or more, according to the function and performance required for the packaging material.

Other various additives and stabilizers may be added to the polyurethane resin described above according to the performance required for the adhesive.

In the polyurethane adhesive containing the aforementioned polyurethane resin and used for forming the outer adhesive layer 12a, the ratio (NCO/OH) of the number of isocyanate groups contained in the polyfunctional isocyanate compound to the number of hydroxyl groups contained in the polyol may be 2 to 60, 5 to 50, or 10 to 40. When the ratio is 2 or more, it is possible to achieve higher adhesive strength between the substrate layer 11 and the barrier layer 13 in a high temperature environment (e.g., 150°C), and the occurrence of lifting of the substrate layer 11 from the barrier layer 13 in a high temperature environment is more likely to be prevented. When the ratio is 60 or less, it is possible to prevent an excessive amount of unreacted hydroxyl groups from remaining, and higher adhesive strength between the substrate layer 11 and the barrier layer 13 is more likely to be achieved in both a room temperature environment and a high temperature environment. The heat resistance of the cured product (outer adhesive layer 12a) of the polyurethane adhesive is improved by urea or biuret generated when a small amount of water contained in the air or in the adhesive is reacted with the polyfunctional isocyanate compound. Thus, a larger amount of polyfunctional isocyanate compound tends to lead to a larger amount of such a unit, resulting in a higher Tg and higher heat resistance.

The thickness of the outer adhesive layer 12a is not particularly limited, but is preferably, for example, 1 to 10 µm, and more preferably 3 to 7 µm, from the viewpoint of obtaining desired adhesive strength, conformability, processability, and the like. When the thickness of the outer adhesive layer 12a is 1 µm or more, the outer adhesive layer 12a is more likely to have high adhesive strength, and shearing force generated by thermal expansion of the substrate layer 11 and the barrier layer 13 in a high temperature environment is more likely to be reduced. When the thickness of the outer adhesive layer 12a is 10 µm or less, the packaging material can have higher formability, and the occurrence of outer layer lifting in a high temperature environment is more likely to be prevented.

### <Barrier layer 13>

The barrier layer 13 has water vapor barrier properties to prevent moisture from penetrating into the power storage device. The barrier layer 13 may have ductility for deep drawing. The barrier layer 13 may be, for example, various types of metal foils such as an aluminum foil, a stainless steel foil, or a copper foil, or a metal vapor deposition film, an inorganic oxide vapor deposition film, a carbon-containing inorganic oxide vapor deposition film, a film provided with such a vapor deposition film, or the like. The film provided with a vapor deposition film may be, for example, an aluminum vapor deposition film, or an inorganic oxide vapor deposition film. These can be used singly or in combination of two or more. The barrier layer 13 is preferably a metal foil, and more preferably an aluminum foil, in terms of mass (specific gravity), moisture resistance, processability, and cost. An aluminum foil has a linear expansion coefficient at 20 to 150°C of approximately 23 × 10⁻⁶/°C, and thus the difference in linear expansion coefficient between the barrier layer 13 and the substrate layer 11 is more likely to be small.

The aluminum foil may be an annealed soft aluminum foil in particular, from the viewpoint of obtaining desired ductility during forming. However, it is more preferable to use an aluminum foil containing iron for the purpose of obtaining further pinhole resistance and ductility during forming. The iron content in the aluminum foil is preferably 0.1 to 9.0 mass% with respect to 100 mass% of aluminum foil, and more preferably 0.5 to 2.0 mass%. When the iron content is 0.1 mass% or more, the packaging material 10 can have better pinhole resistance and higher ductility. When the iron content is 9.0 mass% or less, the packaging material 10 can have better flexibility. The aluminum foil may be an untreated aluminum foil, but is preferably a degreased aluminum foil from the viewpoint of obtaining corrosion resistance. When the aluminum foil is degreased, only one surface of the aluminum foil may be degreased, or both surfaces of the aluminum foil may be degreased.

The thickness of the barrier layer 13 is not particularly limited, but is preferably 9 to 200 µm, and more preferably 15 to 100 µm, considering barrier properties, pinhole resistance, and processability.

### <First anticorrosion treatment layer 14a and second anticorrosion treatment layer 14b>

The first anticorrosion treatment layer 14a and the second anticorrosion treatment layer 14b are provided to prevent corrosion of the metal foil constituting the barrier layer 13 (metal foil layer) and the like. The first anticorrosion treatment layer 14a improves the adhesion between the barrier layer 13 and the outer adhesive layer 12a. The second anticorrosion treatment layer 14b improves the adhesion between the barrier layer 13 and the inner adhesive layer 12b. The first anticorrosion treatment layer 14a and the second anticorrosion treatment layer 14b may have the same configuration or different configurations. The first anticorrosion treatment layer 14a and the second anticorrosion treatment layer 14b (hereinafter also simply referred to as "anticorrosion treatment layers 14a and 14b") are formed, for example, by degreasing treatment, hydrothermal conversion treatment, anodic oxidation treatment, chemical conversion treatment, or a combination of these treatments.

Examples of the degreasing treatment include acid degreasing treatment and alkaline degreasing treatment. In the acid degreasing treatment, an inorganic acid such as sulfuric acid, nitric acid, hydrochloric acid, or hydrofluoric acid may be used singly or as a mixture. An acid degreasing treatment using an acid degreasing agent obtained by dissolving a fluorine-containing compound such as monosodium ammonium difluoride in the inorganic acid is effective in terms of corrosion resistance, in particular when the barrier layer 13 is composed of an aluminum foil. This is because it is possible not only to obtain the effect of degreasing aluminum but also to form a fluoride of aluminum in a passive state. In the alkaline degreasing treatment, sodium hydroxide or the like may be used.

Examples of the hydrothermal conversion treatment include boehmite treatment in which an aluminum foil is immersed in boiling water containing triethanolamine.

Examples of the anodic oxidation treatment include alumite treatment.

The chemical conversion treatment may be an immersion type chemical conversion treatment or a coating type chemical conversion treatment. Examples of the immersion type chemical conversion treatment include chromate treatment, zirconium treatment, titanium treatment, vanadium treatment, molybdenum treatment, calcium phosphate treatment, strontium hydroxide treatment, cerium treatment, ruthenium treatment, and various chemical conversion treatments using mixed phases of these materials. Examples of the coating type chemical conversion treatment include a treatment in which a coating agent having anticorrosion properties is applied onto the barrier layer 13.

Of these anticorrosion treatments, before any of the hydrothermal conversion treatment, the anodic oxidation treatment, and the chemical conversion treatment is performed to form at least part of the anticorrosion treatment layers, it is preferable to perform the aforementioned degreasing treatment in advance. When the barrier layer 13 is composed of a degreased metal foil such as an annealed metal foil, no degreasing treatment is required to form the anticorrosion treatment layers 14a and 14b.

The coating agent used for the coating type chemical conversion treatment preferably contains trivalent chromium. The coating agent may contain at least one polymer selected from the group consisting of a cationic polymer and an anionic polymer described later.

Of the treatments described above, in the hydrothermal conversion treatment and the anodic oxidation treatment in particular, the surface of an aluminum foil is dissolved with a treatment agent to form an aluminum compound having high corrosion resistance (boehmite or alumite). Thus, a co-continuous structure is formed to extend from the barrier layer 13 composed of an aluminum foil to the anticorrosion treatment layers 14a and 14b, and these treatments are therefore included in the definition of chemical conversion treatment. However, as described later, the anticorrosion treatment layers 14a and 14b can be formed only by a pure coating method that is not included in the definition of chemical conversion treatment. In such a case, for example, a rare-earth element oxide sol such as cerium oxide with an average particle size of 100 nm or less may be used as a material that has an anticorrosion effect (inhibitor effect) for aluminum and is preferable in terms of environmental aspects. The use of such a rare-earth element oxide sol allows a metal foil such as an aluminum foil to have an anticorrosion effect even when a typical coating method is used.

Examples of the rare-earth element oxide sol include sols containing various solvents such as an aqueous solvent, an alcoholic solvent, a hydrocarbon solvent, a ketone solvent, an ester solvent, or an ether solvent. Of these sols, an aqueous sol is preferable.

To stabilize dispersion of the rare-earth element oxide sol, the rare-earth element oxide sol typically contains, as a dispersion stabilizer, an inorganic acid such as nitric acid, hydrochloric acid, or phosphoric acid, or a salt thereof, or an organic acid such as acetic acid, malic acid, ascorbic acid, or lactic acid. Of these dispersion stabilizers, phosphoric acid in particular is expected to achieve in the packaging material 10 (1) stabilized dispersion of the sol, (2) higher adhesion to the barrier layer 13 due to the aluminum chelating ability of the phosphoric acid, (3) a higher cohesive force of the anticorrosion treatment layers 14a and 14b (oxide layers) due to dehydration condensation of the phosphoric acid easily occurring even at low temperature, and the like.

The anticorrosion treatment layers 14a and 14b composed of a rare-earth element oxide sol are aggregates of inorganic particles, and thus the cohesive force of the layers may be low even after dry curing. Therefore, the anticorrosion treatment layers 14a and 14b in this case are preferably complexed with an anionic polymer or a cationic polymer to compensate the cohesive force.

The anticorrosion treatment layers 14a and 14b are not limited to the layers described above. For example, the anticorrosion treatment layers 14a and 14b may be formed using a treatment agent obtained by adding phosphoric acid and a chromium compound to a resin binder (aminophenol, etc.), as in the coating type chromate treatment that is a known technique. The use of this treatment agent allows the layers to have both corrosion resistance and adhesion. Alternatively, the layers having both corrosion resistance and adhesion can be obtained using a coating agent prepared in advance by combining a rare-earth element oxide sol with a polycationic polymer or a polyanionic polymer, although the stability of the coating agent needs to be considered.

Regardless of having a multilayer structure or a single-layer structure, the mass per unit area of the anticorrosion treatment layers 14a and 14b is preferably 0.005 to 0.200 g/m², and more preferably 0.010 to 0.100 g/m². When the mass per unit area is 0.005 g/m² or more, the barrier layer 13 is more likely to have corrosion resistance. Even if the mass per unit area exceeds 0.200 g/m², there is little change in the corrosion resistance. When a rare-earth element oxide sol is used and the coating is thick, thermal curing by drying may be insufficient, causing a lower cohesive force. The thickness of the anticorrosion treatment layers 14a and 14b can be converted from the specific gravity of the anticorrosion treatment layers 14a and 14b.

From the viewpoint that the adhesion between the sealant layer and the barrier layer is more likely to be maintained, for example, the anticorrosion treatment layers 14a and 14b may contain cerium oxide, 1 to 100 parts by mass of phosphoric acid or phosphate with respect to 100 parts by mass of the cerium oxide, and a cationic polymer, or may be formed by applying chemical conversion treatment to the barrier layer 13, or may be formed by applying chemical conversion treatment to the barrier layer 13 and contain a cationic polymer.

### <Inner adhesive layer 12b>

The inner adhesive layer 12b adheres the barrier layer 13 provided with the second anticorrosion treatment layer 14b to the sealant layer 16. The inner adhesive layer 12b may be composed of a typical adhesive for adhering a barrier layer to a sealant layer, and may be composed of, for example, the same adhesive as that of the outer adhesive layer 12a described above.

The thickness of the inner adhesive layer 12b is not particularly limited, but is preferably 1 to 10 µm, and more preferably 3 to 7 µm, from the viewpoint of obtaining desired adhesive strength, processability, and the like.

### <Sealant layer 16>

The sealant layer 16 allows the packaging material 10 to have sealability by heat sealing. The sealant layer 16 may be a resin film composed of a polyolefin resin or a polyester resin. Such resins constituting the sealant layer 16 (hereinafter also referred to as a "base resin") may be used singly or in combination of two or more.

Examples of the polyolefin resin include low, medium, and high-density polyethylene, an ethylene-α-olefin copolymer, polypropylene, block and random copolymers containing propylene as a copolymerization component, and a propylene-α-olefin copolymer.

Examples of the polyester resin include a polyethylene terephthalate (PET) resin, a polybutylene terephthalate (PBT) resin, a polyethylene naphthalate (PEN) resin, a polybutylene naphthalate (PBN) resin, and a copolymer thereof.

The sealant layer 16 may contain a polyolefin elastomer. The polyolefin elastomer may or may not have compatibility with the base resin described above, and may contain both a compatible polyolefin elastomer with compatibility and an incompatible polyolefin elastomer with no compatibility. A material with compatibility (compatible material) refers to a material dispersed with a dispersed phase size of 1 nm or more and less than 500 nm in the base resin. A material with no compatibility (incompatible material) refers to a material dispersed with a dispersed phase size of 500 nm or more and less than 20 µm in the base resin.

When the base resin is a polypropylene resin, the compatible polyolefin elastomer may be, for example, a propylene-butene-1 random copolymer, and the incompatible polyolefin elastomer may be, for example, an ethylene-butene-1 random copolymer. Polyolefin elastomers can be used singly or in combination of two or more.

The sealant layer 16 may contain, as additive components, for example, a slip agent, an anti-blocking agent, an antioxidant, a photostabilizer, a flame retardant, and the like. The content of these additive components is preferably 5 parts by mass or less when the total mass of the sealant layer 16 is 100 parts by mass.

The thickness of the sealant layer 16 is not particularly limited, but is preferably in the range of 5 to 100 µm, more preferably in the range of 10 to 100 µm, and still more preferably in the range of 20 to 80 µm, from the viewpoint of achieving both a small thickness and higher heat sealing strength in a high temperature environment.

The sealant layer 16 may be a single-layer film or a multilayer film, which may be selected according to the required function.

A preferred embodiment of the power storage device packaging material of the present embodiment has been described in detail. However, the present disclosure is not limited to such a specific embodiment, and may be variously modified and changed within the spirit of the present disclosure recited in the claims.

For example, Fig. 1 shows an example in which the anticorrosion treatment layers 14a and 14b are provided on the respective surfaces of the barrier layer 13. However, only one of the anticorrosion treatment layers 14a and 14b may be provided, or no anticorrosion treatment layer may be provided.

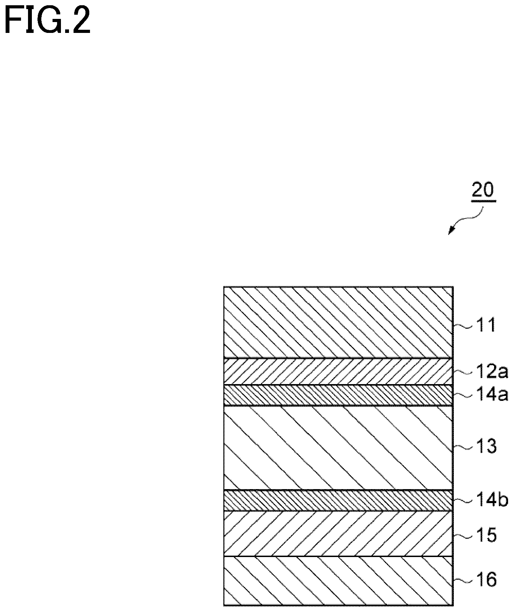

Fig. 1 shows an example in which the inner adhesive layer 12b is used to laminate the barrier layer 13 and the sealant layer 16. However, an adhesive resin layer 15 may be used to laminate the barrier layer 13 and the sealant layer 16, as in a power storage device packaging material 20 shown in Fig. 2. In the power storage device packaging material 20 shown in Fig. 2, the inner adhesive layer 12b may be provided between the barrier layer 13 and the adhesive resin layer 15.

### <Adhesive resin layer 15>

The adhesive resin layer 15 contains an adhesive resin composition as a main component, and if necessary, an additive component. The adhesive resin composition is not particularly limited, but preferably contains a modified polyolefin resin.

The modified polyolefin resin is preferably a polyolefin resin graft modified with an unsaturated carboxylic acid derivative derived from any of an unsaturated carboxylic acid, an acid anhydride thereof, and an ester thereof.

Examples of the polyolefin resin include low-density polyethylene, medium-density polyethylene, high-density polyethylene, an ethylene-α-olefin copolymer, homo polypropylene, block polypropylene, random polypropylene, and propylene-α-olefin copolymer.

The modified polyolefin resin is preferably a polyolefin resin modified with maleic anhydride. Examples of suitable modified polyolefin resins include "Admer" manufactured by Mitsui Chemicals, Inc., and "Modic" manufactured by Mitsubishi Chemical Corporation. Such a modified polyolefin resin has high reactivity with various metals and polymers having various functional groups, and thus the reactivity allows the adhesive resin layer 15 to have adhesion. If necessary, the adhesive resin layer 15 may contain, for example, various additives such as various compatible and incompatible elastomers, flame retardants, slip agents, anti-blocking agents, antioxidants, photostabilizers, and tackifiers.

The thickness of the adhesive resin layer 15 is not particularly limited, but is preferably equal to or less than that of the sealant layer 16 from the viewpoint of stress relaxation and moisture permeation.

In the power storage device packaging material 20, the total thickness of the adhesive resin layer 15 and the sealant layer 16 is preferably in the range of 5 to 100 µm, and more preferably in the range of 20 to 80 µm, from the viewpoint of achieving both a small thickness and higher heat sealing strength in a high temperature environment.

### [Method of producing packaging material]

Next, an example of a method of producing the packaging material 10 shown in Fig. 1 will be described. The method of producing the packaging material 10 is not limited to the following method.

The method of producing the packaging material 10 of the present embodiment includes a step of forming the anticorrosion treatment layers 14a and 14b on the barrier layer 13, a step of bonding the substrate layer 11 to the barrier layer 13 using the outer adhesive layer 12a, a step of further laminating the sealant layer 16 via the inner adhesive layer 12b to prepare a laminate, and if necessary, a step of aging the obtained laminate.

### (Step of laminating anticorrosion treatment layers 14a and 14b on barrier layer 13)

In this step, the anticorrosion treatment layers 14a and 14b are formed on the barrier layer 13. As described above, the anticorrosion treatment layers 14a and 14b may be formed on the barrier layer 13 by applying degreasing treatment, hydrothermal conversion treatment, anodic oxidation treatment, or chemical conversion treatment to the barrier layer 13, or applying a coating agent having anticorrosion properties to the barrier layer 13.

The anticorrosion treatment layers 14a and 14b as a multilayer may be formed, for example, by applying a coating liquid (coating agent) for forming an anticorrosion treatment layer on the lower side (barrier layer 13 side) to the barrier layer 13, and baking the coating agent to form a first layer, and then applying a coating liquid (coating agent) for forming an anticorrosion treatment layer on the upper side to the first layer, and baking the coating agent to form a second layer.

The degreasing treatment may be performed by spraying or immersion. The hydrothermal conversion treatment and the anodic oxidation treatment may be performed by immersion. The chemical conversion treatment may be performed by a method appropriately selected from immersion, spraying, coating, and the like according to the type of chemical conversion treatment.

The coating agent having anticorrosion properties may be applied using various methods such as gravure coating, reverse coating, roll coating, or bar coating.

As described above, the various treatments may be applied to one or both surfaces of the metal foil. When the treatment is applied to one surface of the metal foil, it is preferable to apply the treatment to the surface of the metal foil on which the sealant layer 16 is to be laminated. If necessary, the treatment may also be applied to the surface of the substrate layer 11.

The amounts of the coating agents for forming the first and second layers are preferably both 0.005 to 0.200 g/m², and more preferably 0.010 to 0.100 g/m².

If necessary, dry curing may be performed in a base material temperature range of 60 to 300°C according to the drying conditions for the anticorrosion treatment layers 14a and 14b used.

### (Step of bonding substrate layer 11 to barrier layer 13)

In this step, the substrate layer 11 is bonded via the outer adhesive layer 12a to the barrier layer 13 provided with the anticorrosion treatment layers 14a and 14b. Bonding is performed using a method such as dry lamination, non-solvent lamination, or wet lamination to bond the layers with the material for forming the outer adhesive layer 12a described above. The outer adhesive layer 12a is provided so that the dry coating amount of the outer adhesive layer 12a is in the range of 1 to 10 g/m², and more preferably in the range of 2 to 7 g/m².

### (Step of laminating inner adhesive layer 12b and sealant layer 16)

In this step, the sealant layer 16 is bonded to the surface on the second anticorrosion treatment layer 14b side of the barrier layer 13 via the inner adhesive layer 12b. Bonding may be performed by a method such as a wet process or dry lamination.

In the wet process, a solution or a dispersion of the adhesive for forming the inner adhesive layer 12b is applied onto the second anticorrosion treatment layer 14b and the solvent is evaporated at a predetermined temperature, followed by drying, which may be further followed by baking if necessary, to form a film. Then, the sealant layer 16 is laminated to produce the packaging material 10. The adhesive may be applied by any of the various coating methods described above. The preferred dry coating amount of the inner adhesive layer 12b is the same as that of the outer adhesive layer 12a.

In this case, for example, a sealant layer forming resin composition containing the components of the sealant layer 16 described above may be used to form the sealant layer 16 using a melt extrusion molding machine. The processing speed of the melt extrusion molding machine may be 80 m/min or more from the viewpoint of productivity.

### (Aging treatment step)

In this step, the laminate is aged (cured). Aging of the laminate can promote the adhesion between the barrier layer 13, the second anticorrosion treatment layer 14b, the inner adhesive layer 12b, and the sealant layer 16. The laminate may be aged at a temperature in the range of room temperature to 100°C. The aging time may be, for example, 1 to 10 days.

In this manner, the packaging material 10 of the present embodiment as shown in Fig. 1 can be produced.

Next, an example of a method of producing the packaging material 20 shown in Fig. 2 will be described. The method of producing the packaging material 20 is not limited to the following method.

The method of producing the packaging material 20 of the present embodiment includes a step of forming the anticorrosion treatment layers 14a and 14b on the barrier layer 13, a step of bonding the substrate layer 11 to the barrier layer 13 using the outer adhesive layer 12a, a step of further laminating the adhesive resin layer 15 and the sealant layer 16 to prepare a laminate, and if necessary, a step of heat treating the obtained laminate. The steps up to the step of bonding the substrate layer 11 to the barrier layer 13 can be performed in the same manner as in the method of producing the packaging material 10 described above.

### (Step of laminating adhesive resin layer 15 and sealant layer 16)

In this step, the adhesive resin layer 15 and the sealant layer 16 are formed on the second anticorrosion treatment layer 14b formed in the earlier step. The adhesive resin layer 15 and the sealant layer 16 may be formed on the second anticorrosion treatment layer 14b by sandwich laminating the adhesive resin layer 15 together with the sealant layer 16 using an extrusion laminator. Alternatively, the adhesive resin layer 15 and the sealant layer 16 may be laminated by tandem lamination or co-extrusion in which the adhesive resin layer 15 and the sealant layer 16 are extruded. When the adhesive resin layer 15 and the sealant layer 16 are formed, for example, the components are mixed so that the adhesive resin layer 15 and the sealant layer 16 are configured as described above. The sealant layer forming resin composition described above is used to form the sealant layer 16.

In this step, a laminate is obtained in which the substrate layer 11, the outer adhesive layer 12a, the first anticorrosion treatment layer 14a, the barrier layer 13, the second anticorrosion treatment layer 14b, the adhesive resin layer 15, and the sealant layer 16 are laminated in this order as shown in Fig. 2.

The adhesive resin layer 15 may be laminated by preparing materials dry blended so that the material composition described above is achieved, and directly extruding the materials using an extrusion laminator. Alternatively, the adhesive resin layer 15 may be laminated by preparing granules obtained in advance by melt blending using a melt-kneading device such as a single-screw extruder, a twin-screw extruder, or a Brabender mixer, and extruding the granules using an extrusion laminator.

The sealant layer 16 may be laminated by preparing, as the components of the sealant layer forming resin composition, materials dry blended so that the material composition described above is achieved, and directly extruding the materials using an extrusion laminator. Alternatively, the adhesive resin layer 15 and the sealant layer 16 may be laminated by preparing granules obtained in advance by melt blending using a melt-kneading device such as a single-screw extruder, a twin-screw extruder, or a Brabender mixer, and extruding the granules as the adhesive resin layer 15 and the sealant layer 16 using an extrusion laminator by tandem lamination or co-extrusion. Alternatively, the adhesive resin layer 15 and the sealant layer 16 may be laminated by forming a sealant single film as a cast film in advance using a sealant layer forming resin composition, and sandwich laminating the film together with an adhesive resin. The adhesive resin layer 15 and the sealant layer 16 may be formed, for example, at a speed (processing speed) of 80 m/min or more from the viewpoint of productivity.

### (Heat treatment step)

In this step, the laminate is heat treated. Heat treatment of the laminate can improve the adhesion between the barrier layer 13, the second anticorrosion treatment layer 14b, the adhesive resin layer 15, and the sealant layer 16. In the heat treatment, the laminate is preferably heat treated at least at a temperature of not less than the melting point of the adhesive resin layer 15.

In this manner, the packaging material 20 of the present embodiment as shown in Fig. 2 can be produced.

Preferred embodiments of the power storage device packaging material of the present disclosure have been described in detail. However, the present disclosure is not limited to such specific embodiments, and may be variously modified and changed within the spirit of the present disclosure recited in the claims.

The power storage device packaging material of the present disclosure can be preferably used as a packaging material for power storage devices including, for example, secondary batteries such as lithium-ion batteries, nickel hydride batteries, and lead batteries, and electrochemical capacitors such as electric double layer capacitors. In particular, the power storage device packaging material of the present disclosure is preferable as a packaging material for solid-state batteries including a solid electrolyte.

### [Power storage device]

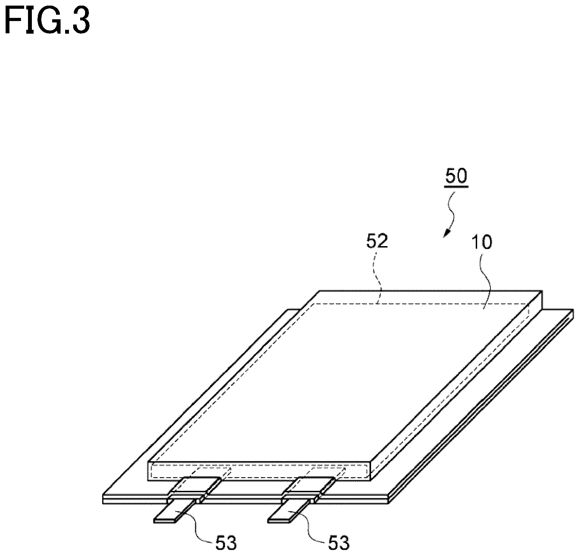

Fig. 3 is a perspective view showing an embodiment of a power storage device produced using the packaging material described above. As shown in Fig. 3, a power storage device 50 includes a battery element (power storage device body) 52, two metal terminals (current output terminals) 53 for outputting an electric current from the battery element 52 to the outside, and the packaging material 10 in which the battery element 52 is sealed. The packaging material 10 of the power storage device 50 is the packaging material 10 according to the present embodiment described above. In the packaging material 10, the substrate layer 11 is the outermost layer, and the sealant layer 16 is the innermost layer. Thus, the packaging material 10 in which the battery element 52 is housed is formed by folding a single laminate film into two portions or stacking two laminate films so that the substrate layer 11 faces the outside of the power storage device 50 and the sealant layer 16 faces the inside of the power storage device 50, and then heat sealing the laminate film or the two laminate films. The packaging material 10 in which the battery element 52 is sealed may be formed by folding a laminate film into two portions so that the substrate layer 11 faces the outside of the power storage device 50 and the sealant layer 16 faces the inside of the power storage device 50, cold forming one of the two portions, and then heat sealing the laminate film. Alternatively, in the power storage device 50, the battery element 52 may be sealed by cold forming one of two packaging materials 10, stacking the other packaging material 10 on the cold-formed packaging material 10, and then heat sealing the packaging materials 10. The power storage device 50 may include the packaging material 20 instead of the packaging material 10.

In the battery element 52, an electrolyte is interposed between a positive electrode and a negative electrode. The metal terminals 53 are each a part of the current collector externally extended from the packaging material 10, and are composed of a metal foil such as a copper foil or an aluminum foil.

The power storage device 50 of the present embodiment may be an all-solid-state battery. In such a case, the battery element 52 includes, as the electrolyte, a solid electrolyte such as a sulfide solid electrolyte. The power storage device 50 of the present embodiment includes the packaging material 10 of the present embodiment. Thus, even when the power storage device 50 of the present embodiment is used in a high temperature environment (e.g., 150°C), it is possible to prevent the occurrence of lifting of the substrate layer from the barrier layer and prevent the occurrence of dielectric breakdown due to a deterioration in the insulating properties of the packaging material 10.

### [Examples]

In the following, the present disclosure will be more specifically described by way of examples. However, the present disclosure is not limited to the following examples.

### [Materials used]

Materials used in Examples 1-1 to 1-5 and Comparative Examples 1-1 to 1-5 are as follows.

### <Substrate layer>

Semi-aromatic polyamides 1 to 4: Simultaneously biaxially stretched semi-aromatic polyamide film having a linear expansion coefficient shown in Table 1 (thickness: 25 µm)
PBT: Polybutylene terephthalate film (manufactured by Toyobo Co., Ltd., trade name: DE048, thickness: 15 µm)
Nylon 6: Nylon 6 film (manufactured by Toyobo Co., Ltd., trade name: N1102, thickness: 25 µm)
PET/Nylon 6: Laminated film of a polyethylene terephthalate film (manufactured by Toyobo Co., Ltd., trade name: E5102, thickness: 12 µm) and a nylon 6 film (manufactured by Idemitsu Unitech Co., Ltd., trade name: G100)

### <Outer adhesive layer>

Polyester urethane: A polyester urethane adhesive was used, which was obtained by mixing a polyester polyol (manufactured by Toyo-Morton, Ltd., trade name: TMK-55) with an isocyanate (TDI adduct, manufactured by Toyo-Morton, Ltd., trade name: CAT-10L), and diluting the mixture with a solvent.

PO adhesive: A polyolefin adhesive was used, which was obtained by mixing Auroren 350S (trade name) manufactured by Nippon Paper Industries Co., Ltd. with DYNAGRAND CR-410B (trade name) manufactured by Toyo-Morton, Ltd., and diluting the mixture with a solvent.

### <First anticorrosion treatment layer (substrate layer side) and second anticorrosion treatment layer (sealant layer side)>

(CL-1): A sodium polyphosphate-stabilized cerium oxide sol was used. The solid content concentration of the sodium polyphosphate-stabilized cerium oxide sol was adjusted to 10 mass% using distilled water as a solvent. The sodium polyphosphate-stabilized cerium oxide sol was obtained by mixing 10 parts by mass of the sodium salt of phosphoric acid with respect to 100 parts by mass of cerium oxide.

(CL-2): A composition composed of 90 mass% of polyallylamine (manufactured by Nitto Boseki Co., Ltd.) and 10 mass% of polyglycerol polyglycidyl ether (manufactured by Nagase Chemtex Corporation) was used. The solid content concentration of the composition was adjusted to 5 mass% using distilled water as a solvent.

### <Barrier layer (thickness: 40 µm)>

An annealed and degreased soft aluminum foil (8079 manufactured by Toyo Aluminium K.K.) was used.

### <Inner adhesive layer (thickness: 3 µm)>

The polyester urethane adhesive described above was used.

### <Sealant layer (thickness: 75 µm)>

A polyethylene terephthalate film (manufactured by Toyobo Co., Ltd., trade name: E5100) was used.

### [Production of packaging material]

### (Example 1-1)

First, first and second anticorrosion treatment layers were formed on a barrier layer by the following procedure. Specifically, the material (CL-1) was applied to both surfaces of the barrier layer by micro gravure coating so that the dry coating amount of the material (CL-1) was 70 mg/m², followed by baking at 200°C in a drying unit. Then, the material (CL-2) was applied onto the obtained layer by micro gravure coating so that the dry coating amount of the material (CL-2) was 20 mg/m², thereby forming a composite layer composed of the materials (CL-1) and (CL-2) as the first and second anticorrosion treatment layers. The two materials (CL-1) and (CL-2) became complexed to form the composite layer having corrosion resistance.

Next, the surface on the first anticorrosion treatment layer side of the barrier layer provided with the first and second anticorrosion treatment layers was bonded to a substrate layer using a polyester urethane adhesive (outer adhesive layer) by dry lamination. When the barrier layer was laminated on the substrate layer, a polyester urethane adhesive was applied onto the surface on the first anticorrosion treatment layer side of the barrier layer so that the thickness of the polyester urethane adhesive after curing was as shown in Table 1, followed by drying at 80°C for 1 minute. Then, the barrier layer was laminated on the substrate layer, followed by aging at 80°C for 120 hours.

Next, the surface on the second anticorrosion treatment layer side of the barrier layer provided with the first and second anticorrosion treatment layers was bonded to a sealant layer using a polyester urethane adhesive (inner adhesive layer) by dry lamination. When the barrier layer was laminated on the sealant layer, a polyester urethane adhesive was applied onto the surface on the second anticorrosion treatment layer side of the barrier layer so that the thickness of the polyester urethane adhesive after curing was 3 µm, followed by drying at 80°C for 1 minute. Then, the barrier layer was laminated on the sealant layer, followed by aging at 80°C for 120 hours. In this manner, a packaging material (a laminate of the substrate layer, the outer adhesive layer, the first anticorrosion treatment layer, the barrier layer, the second anticorrosion treatment layer, the inner adhesive layer, and the sealant layer) was produced.

### (Examples 1-2 to 1-5 and Comparative Examples 1-1 to 1-5)

A packaging material (a laminate of the substrate layer, the outer adhesive layer, the first anticorrosion treatment layer, the barrier layer, the second anticorrosion treatment layer, the inner adhesive layer, and the sealant layer) of each of Examples 1-2 to 1-5 and Comparative Examples 1-1 to 1-5 was produced in the same manner as in Example 1-1 except that the substrate layer and/or the outer adhesive layer was configured as shown in Table 1. When the PO adhesive was used as the outer adhesive layer, the conditions for laminating the barrier layer on the substrate layer were changed to drying at 100°C for 1 minute and aging at 40°C for 120 hours.

### [Measurement of linear expansion coefficient]

The substrate layer and the barrier layer provided with the anticorrosion treatment layers of each of Examples 1-1 to 1-5 and Comparative Examples 1-1 to 1-5 were cut into a size of 30 mm in the MD direction × 5 mm in the TD direction and a size of 30 mm in the TD direction × 5 mm in the MD direction (the measurement direction was the longitudinal direction for both) to prepare specimens. The dimensional change in the longitudinal direction of the obtained specimens was measured using a thermomechanical analyzer (manufactured by Hitachi High-Tech Science Corporation, trade name: TMA7100). The measurement conditions are as follows. A TMA curve obtained by measurement during a second temperature increase was used to obtain the average change in length per 1°C in a temperature range of 20°C to 150°C as the linear expansion coefficient of the specimens. The results are shown in Table 1. Table 1 also shows a difference in linear expansion coefficient between the substrate layer and the barrier layer.

### [Temperature conditions]

(1) Temperature increase from 20°C to 170°C at 10°C/min (first temperature increase)
(2) Temperature decrease from 170°C to 20°C at 10°C/min
(3) Temperature increase from 20°C to 170°C at 10°C/min (second temperature increase)

### [Load]

Constant load of 40 mN

### [Evaluation of outer layer lifting]

The packaging material obtained in each of Examples 1-1 to 1-5 and Comparative Examples 1-1 to 1-5 was cut into a rectangular piece with a size of 120 mm in the TD direction × 200 mm in the MD direction, and the rectangular piece was placed in a forming apparatus so that the sealant layer faced upward. In the forming apparatus, the forming depth was set to 4.0 mm and the pressing pressure was set to 0.8 MPa, and the packaging material was subjected to cold forming in an environment at a room temperature of 23°C and a dew point temperature of -35°C. The punch die used had a rectangular transverse cross section of 80 mm × 70 mm, a bottom with a punch radius (RP) of 1 mm, and a side surface with a punch corner radius (RCP) of 1 mm. The die used had an opening top with a die radius (RD) of 1 mm. The clearance between the punch die and the die was set to 170 µm. The forming area was set to the approximate center of one of the halves divided at the approximate center of the cut piece of the packaging material in the longitudinal direction (MD direction), and the longitudinal direction of the punch die was set to the TD direction of the packaging material.

Samples obtained by deep drawing under the above conditions were stored in a 150°C environment for 3 days, and then checked for the presence or absence of separation of the substrate layer from the barrier layer (outer layer lifting). The samples in which no outer layer lifting occurred after storage for 3 days were stored in a 150°C environment for additional 4 days (7 days in total), and then checked for the presence or absence of outer layer lifting. The outer layer lifting was evaluated based on the following criteria. The evaluation results are shown in Table 1. The evaluation result A or B was determined to be acceptable.
A: No outer layer lifting occurred after storage for 7 days.
B: No outer layer lifting occurred after storage for 3 days.
C: Outer layer lifting occurred after storage for 3 days.

**[Table 1]**

| | Substrate layer | | | | Outer adhesive layer | | Metal foil layer | | | | Difference in linear expansion coefficient between substrate layer and metal foil layer (×10⁶/°C) | | Outer layer lifting |
|---|---|---|---|---|---|---|---|---|---|---|---|---|---|
| | Material | Thickness (µm) | Linear expansion coefficient (×10⁶/°C) | | Material | Thickness (µm) | Material | Thickness (µm) | Linear expansion coefficient (×10⁶/°C) | | | | |
| | | | MD | TD | | | | | MD | TD | MD | TD | |
| Example 1-1 | Semi -aromatic polyamide 1 | 25 | 14.6 | 12.0 | Polyester urethane | 3 | Aluminum | 40 | 21.6 | 23.6 | 7 | 11.6 | A |
| Example 1-2 | | | 14.6 | 12.0 | | 10 | | | 21.6 | 23.6 | 7 | 11.6 | A |
| Example 1-3 | Semi -aromatic polyamide 2 | | 11.0 | 9.0 | | 3 | | | 21.6 | 23.6 | 10.6 | 14.6 | A |
| Example 1-4 | Semi -aromatic polyamide 1 | | 14.6 | 12.0 | | 12 | | | 21.6 | 23.6 | 7 | 11.6 | B |
| Example 1-5 | | | 14.6 | 12.0 | PO adhesive | 3 | | | 21.6 | 23.6 | 7 | 11.6 | B |
| Comparative Example 1-1 | Semi -aromatic polyamide 3 | | 43.0 | -24.0 | Polyester urethane | 3 | | | 21.6 | 23.6 | 21.4 | 47.6 | C |
| Comparative Example 1-2 | Semi -aromatic polyamide 4 | | 57.0 | 66.0 | | 3 | | | 21.6 | 23.6 | 35.4 | 42.4 | C |
| Comparative Example 1-3 | Nylon 6 | | 43.0 | 23.1 | | 3 | | | 21.6 | 23.6 | 21.4 | 0.5 | C |
| Comparative Example 1-4 | PBT | 15 | 79.1 | 129.9 | | 3 | | | 21.6 | 23.6 | 57.5 | 106.3 | C |
| Comparative Example 1-5 | PET/Nylon 6 | 12/15 | 43.0 | 13.3 | | 3 | | | 21.6 | 23.6 | 21.4 | 10.3 | C |

### [Materials used]

Materials used in Examples 2-1 to 2-3 and Comparative Examples 2-1 to 2-3 are as follows.

As the substrate layer 11, five types of films were prepared.

A first substrate layer 11 was a simultaneously biaxially stretched semi-aromatic polyamide film (thickness: 25 µm).

A second substrate layer 11 was a semi-aromatic polyamide film simultaneously biaxially stretched at a stretch ratio different from that of the first substrate layer (thickness: 25 µm).

A third substrate layer 11 was a semi-aromatic polyamide film formed by casting (thickness: 25 µm).

A fourth substrate layer 11 was a simple type polyethylene terephthalate film sequentially biaxially stretched (manufactured by Unitika Ltd., thickness: 25 µm).

A fifth substrate layer 11 was a polybutylene terephthalate film produced by a tubular method (manufactured by Kohjin Film & Chemicals Co., Ltd., trade name: Boblet, thickness: 25 µm).

Next, as a urethane adhesive for the outer adhesive layer 12a, a polyester urethane adhesive was used, which was obtained by mixing a polyester polyol (manufactured by Toyo-Morton, Ltd., trade name: TMK-55) with an isocyanate (TDI adduct, manufactured by Toyo-Morton, Ltd., trade name: CAT-10L) as polyester urethane, and diluting the mixture with a solvent.

As a polyolefin (PO) adhesive for the outer adhesive layer 12a, a polyolefin adhesive was used, which was obtained by mixing Auroren 350S (trade name) manufactured by Nippon Paper Industries Co., Ltd. with DYNAGRAND CR-410B (trade name) manufactured by Toyo-Morton, Ltd., and diluting the mixture with a solvent.

As the barrier layer 13, an aluminum foil (thickness: 40 µm) provided with anticorrosion treatment layers on both surfaces thereof was used.

As a resin for the adhesive resin layer 15, an acid-modified polypropylene resin was used. The adhesive resin layer had a thickness of 27 µm.

As a resin for the sealant layer 16, a polypropylene resin was used. The sealant layer 16 had a thickness of 53 µm.

### [Production of packaging material]

### (Example 2-1)

First, one of the surfaces of a barrier layer on which anticorrosion treatment layers were provided was bonded to a substrate layer using a polyester urethane adhesive (outer adhesive layer) by dry lamination. When the barrier layer was laminated on the substrate layer, a polyester urethane adhesive was applied to one of the surfaces of the barrier layer, followed by drying at 80°C for 1 minute. Then, the barrier layer was laminated on the substrate layer, followed by aging at 80°C for 120 hours.

Next, the barrier layer was adhered to a sealant layer by sandwich lamination. Specifically, a melted acid-modified polypropylene resin was extruded between the barrier layer and the sealant layer, and the layers were pressure bonded to be integrated.

### (Examples 2-2 and 2-3 and Comparative Examples 2-1 to 2-3)

A packaging material (a laminate of the substrate layer, the outer adhesive layer, the first anticorrosion treatment layer, the barrier layer, the second anticorrosion treatment layer, the inner adhesive layer, and the sealant layer) of each of Examples 2-2 and 2-3 and Comparative Examples 2-1 to 2-3 was produced in the same manner as in Example 2-1 except that the substrate layer and/or the outer adhesive layer was configured as shown in Table 2. When the PO adhesive was used as the outer adhesive layer, the conditions for laminating the barrier layer on the substrate layer were changed to drying at 100°C for 1 minute and aging at 40°C for 120 hours.

### [Measurement of amount of elongation by creep test]

Each of the five types of substrate layers was cut to prepare a sample with a length of 20 mm and a width of 10 mm. For the first sample, the longitudinal direction was set to the MD direction, and the width direction was set to the TD direction.

Then, a constant load of 5 N was continuously applied to the sample in a 150°C environment for 3 hours using a thermomechanical analyzer (trade name: DMA7100) manufactured by Hitachi High-Tech Science Corporation, and the amount of elongation of the sample (the amount of elongation of the sample in the MD direction) was measured.

Next, the longitudinal direction was set to the TD direction and the width direction was set to the MD direction, and a sample with a length of 20 mm and a width of 10 mm was prepared in the same manner, and a constant load of 5 N was continuously applied to the sample in a 150°C environment for 3 hours in the same manner. Then, the amount of elongation of the sample (the amount of elongation of the sample in the TD direction) was measured.

### [Evaluation of deformation of power storage device in 150°C environment]

The packaging material of each of Examples 2-1 to 2-3 and Comparative Examples 2-1 to 2-3 was cut into a rectangular piece with a size of 120 mm in the TD direction × 200 mm in the MD direction, and the rectangular piece was placed in a forming apparatus so that the sealant layer faced upward. In the forming apparatus, the forming depth was set to 4.0 mm and the pressing pressure was set to 0.8 MPa, and the packaging material was subjected to cold forming in an environment at a room temperature of 23°C and a dew point temperature of -35°C. The punch die used had a rectangular transverse cross section of 80 mm × 70 mm, a bottom with a punch radius (RP) of 1 mm, and a side surface with a punch corner radius (RCP) of 1 mm. The die used had an opening top with a die radius (RD) of 1 mm. The clearance between the punch die and the die was set to 170 µm. The forming area was set to the approximate center of one of the halves divided at the approximate center of the cut piece of the packaging material in the longitudinal direction (MD direction), and the longitudinal direction of the punch die was set to the TD direction of the packaging material.

Power storage devices produced in this manner were stored in a 150°C environment for 1 week, and then returned to a room temperature environment, and the appearance of the power storage devices was visually checked. The evaluation criteria are as follows.
A: The appearance of the power storage device was unchanged before and after storage.
B: Part of the power storage device was expanded and deformed after storage.
C: The entire power storage device was expanded and deformed after storage.

### [Evaluation of formability]

The packaging material of each of Examples 2-1 to 2-3 and Comparative Examples 2-1 to 2-3 was subjected to cold forming, and evaluated for the presence or absence of pinholes and cracks. The number of samples was 10. The forming conditions are as described above. The evaluation criteria are as follows.
A: Neither pinholes nor cracks occurred in any of the 10 samples of the packaging material.
B: Neither pinholes nor cracks occurred in 8 or more samples of the packaging material.
C: Pinholes and/or cracks occurred in 3 or more samples of the packaging material.

### [Evaluation of peel resistance in 150°C environment]

The packaging material of each of Examples 2-1 to 2-3 and Comparative Examples 2-1 to 2-3 was subjected to cold forming, and stored in a 150°C environment for 3 days, followed by measurement by a 90-degree peel test under conditions of a tensile speed of 50 mm/min using a tensile tester (manufactured by Shimadzu Corporation). The evaluation criteria are as follows.
A: Peel strength was 1 N/15 mm or more.
C: Peel strength was less than 1 N/15 mm.

**[Table 2]**

| | Substrate layer | | | | | | | Outer adhesive layer | Deformation in 150°C environment | Formability |
|---|---|---|---|---|---|---|---|---|---|---|
| | Type | Material | Film forming method | Thickness | Amount of elongation (mm) in creep test | | | Material | | |
| | | | | | MD | TD | Difference between MD and TD | | | |
| Example 2-1 | First substrate layer | Semi -aromatic polyamide | Simultaneous biaxial stretching | 25 µm | 0.96 | 1.78 | 0.82 | Polyester urethane | A | A |
| Example 2-2 | Second substrate layer | Semi -aromatic polyamide | Simultaneous biaxial stretching | 25 µm | 2.62 | 0.49 | 2.13 | Polyester urethane | B | A |
| Example 2-3 | Third substrate layer | Semi -aromatic polyamide | Casting | 25 µm | 1.82 | 1.80 | 0.02 | Polyester urethane | A | B |
| Comparative Example 2-1 | Fourth substrate layer | PET | Sequential biaxial stretching | 25 µm | 7.62 | 3.23 | 4.39 | Polyester urethane | c | A |
| Comparative Example 2-2 | Fourth substrate layer | PET | Sequential biaxial stretching | 25 µm | 7.62 | 3.23 | 4.39 | PO adhesive | c | A |
| Comparative Example 2-3 | Fifth substrate layer | PET | Tubular | 25 µm | 6.53 | 7.26 | 0.73 | Polyester urethane | c | A |

### [Materials used]

Materials used in Examples 3-1 to 3-3 and Comparative Examples 3-1 to 3-5 are as follows.

### <Substrate layer>

Semi-aromatic polyamide: Semi-aromatic polyamide film prepared by a film forming method shown in Table 3 and having a thickness and a Tg shown in Table 3
PET: Polyethylene terephthalate film prepared by a film forming method shown in Table 3 and having a thickness and a Tg shown in Table 3 (manufactured by Toray Industries, Inc., trade name: Lumirror #25, #50)
PBT: Polybutylene terephthalate film prepared by a film forming method shown in Table 3 and having a thickness and a Tg shown in Table 3 (manufactured by Kohjin Film & Chemicals Co., Ltd., trade name: Boblet)
Nylon 6: Nylon 6 film prepared by a film forming method shown in Table 3 and having a thickness and a Tg shown in Table 3 (manufactured by Unitika Ltd., trade name: ON-U)

### <Outer adhesive layer (thickness: 5 µm)>

Polyester urethane: A polyester urethane adhesive was used, which was obtained by mixing a polyester polyol (manufactured by Toyo-Morton, Ltd., trade name: TMK-55) with an isocyanate (TDI adduct, manufactured by Toyo-Morton, Ltd., trade name: CAT-10L), and diluting the mixture with a solvent.

PO adhesive: A polyolefin adhesive was used, which was obtained by mixing Auroren 350S (trade name) manufactured by Nippon Paper Industries Co., Ltd. with DYNAGRAND CR-410B (trade name) manufactured by Toyo-Morton, Ltd., and diluting the mixture with a solvent.

### <First anticorrosion treatment layer (substrate layer side) and second anticorrosion treatment layer (sealant layer side)>

(CL-1): A sodium polyphosphate-stabilized cerium oxide sol was used. The solid content concentration of the sodium polyphosphate-stabilized cerium oxide sol was adjusted to 10 mass% using distilled water as a solvent. The sodium polyphosphate-stabilized cerium oxide sol was obtained by mixing 10 parts by mass of the sodium salt of phosphoric acid with respect to 100 parts by mass of cerium oxide.

(CL-2): A composition composed of 90 mass% of polyallylamine (manufactured by Nitto Boseki Co., Ltd.) and 10 mass% of polyglycerol polyglycidyl ether (manufactured by Nagase Chemtex Corporation) was used. The solid content concentration of the composition was adjusted to 5 mass% using distilled water as a solvent.

### <Barrier layer (thickness: 40 µm)>

An annealed and degreased soft aluminum foil (8079 manufactured by Toyo Aluminium K.K.) was used.

### <Adhesive resin layer (thickness: 27 µm)>

As the adhesive resin, a random polypropylene (PP)-based acid-modified polypropylene resin composition (manufactured by Mitsui Chemicals, Inc.) was used.

### <Sealant layer (thickness: 53 µm)>

As the sealant layer forming resin composition, a polypropylene-polyethylene random copolymer (manufactured by Prime Polymer Co., Ltd., trade name: F744NP) was used.

### [Production of packaging material]

### (Example 3-1)

First, first and second anticorrosion treatment layers were formed on a barrier layer by the following procedure. Specifically, the material (CL-1) was applied to both surfaces of the barrier layer by direct gravure coating so that the dry coating amount of the material (CL-1) was 70 mg/m², followed by baking at 200°C in a drying unit. Then, the material (CL-2) was applied onto the obtained layer by direct gravure coating so that the dry coating amount of the material (CL-2) was 20 mg/m², thereby forming a composite layer composed of the materials (CL-1) and (CL-2) as the first and second anticorrosion treatment layers. The two materials (CL-1) and (CL-2) became complexed to form the composite layer having corrosion resistance.

Next, the surface on the first anticorrosion treatment layer side of the barrier layer provided with the first and second anticorrosion treatment layers was bonded to a substrate layer using a polyester urethane adhesive (outer adhesive layer) by dry lamination. When the barrier layer was laminated on the substrate layer, a polyester urethane adhesive was applied onto the surface on the first anticorrosion treatment layer side of the barrier layer so that the thickness of the polyester urethane adhesive after curing was 5 µm, followed by drying at 80°C for 30 seconds. Then, the barrier layer was laminated on the substrate layer, followed by aging at 80°C for 120 hours.

Next, the laminate of the barrier layer and the substrate layer was placed in an unwinding unit of an extrusion laminator, and an adhesive resin layer (thickness: 27 µm) and a sealant layer (thickness: 53 µm) were coextruded onto the second anticorrosion treatment layer under processing conditions of 270°C and 80 m/min so that the adhesive resin layer and the sealant layer were laminated in this order. The adhesive resin layer and the sealant layer used in the extrusion lamination were obtained by preparing compounds of various materials in advance using a twin-screw extruder, and water cooling and pelletizing the compounds.

The laminate obtained in this manner was heat treated so that the maximum temperature reached by the laminate was 190°C to produce a packaging material (a laminate of the substrate layer, the outer adhesive layer, the first anticorrosion treatment layer, the barrier layer, the second anticorrosion treatment layer, the adhesive resin layer, and the sealant layer).

### (Examples 3-2 and 3-3 and Comparative Examples 3-1 to 3-5)

A packaging material (a laminate of the substrate layer, the outer adhesive layer, the first anticorrosion treatment layer, the barrier layer, the second anticorrosion treatment layer, the adhesive resin layer, and the sealant layer) of each of Examples 3-2 and 3-3 and Comparative Examples 3-1 to 3-5 was produced in the same manner as in Example 3-1 except that the substrate layer and/or the outer adhesive layer was configured as shown in Table 3. When the PO adhesive was used as the outer adhesive layer, the conditions for laminating the barrier layer on the substrate layer were changed to drying at 100°C for 30 seconds and aging at 40°C for 120 hours.

### [Measurement of volume resistivity]

The volume resistivity of the substrate layer of each of Examples 3-1 to 3-3 and Comparative Examples 3-1 to 3-5 was measured in accordance with JIS K 6911 under conditions of a temperature of 23°C or 150°C, a relative humidity of 20% RH or less, and a voltage of 100 V. The resistance change ratio (the volume resistivity in a 23°C environment/the volume resistivity in a 150°C environment) was obtained from the volume resistivity in a 23°C environment and the volume resistivity in a 150°C environment. The results are shown in Table 3.

### [Measurement of dielectric breakdown voltage]

The packaging material obtained in each of Examples 3-1 to 3-3 and Comparative Examples 3-1 to 3-5 was cut into a size of 100 mm × 100 mm to prepare specimens. A dielectric breakdown voltage (AC, 50 Hz) in a direction perpendicular to the surface of the specimens was measured in accordance with JIS C2110-1. The details of the test conditions are as follows. In the measurement, a dielectric breakdown voltage of 8 kV or more was determined as "A", a dielectric breakdown voltage of 7 kV or more and less than 8 kV was determined as "B", and a dielectric breakdown voltage of less than 7 kV was determined as "C". The results are shown in Table 3.

### (Test conditions)

The number of specimens: 3
Test temperature: 150°C
Surrounding medium: In oil
Electrode shape: Columnar shape with a diameter of 25 mm/Columnar shape with a diameter of 25 mm
Pressure increasing method: Short-time test
Pressure increase rate: 0.5 kV/sec

### [Evaluation of formability]

The packaging material obtained in each of Examples 3-1 to 3-3 and Comparative Examples 3-1 to 3-5 was cut into a rectangular piece with a size of 120 mm in the TD direction × 200 mm in the MD direction, and the rectangular piece was placed in a forming apparatus so that the sealant layer faced upward. In the forming apparatus, the forming depth was set to 5.0 mm and the pressing pressure was set to 0.8 MPa, and the packaging material was subjected to cold forming in an environment at a room temperature of 23°C and a dew point temperature of -35°C. The punch die used had a rectangular transverse cross section of 80 mm × 70 mm, a bottom with a punch radius (RP) of 1 mm, and a side surface with a punch corner radius (RCP) of 1 mm. The die used had an opening top with a die radius (RD) of 1 mm. The clearance between the punch die and the die was set to 170 µm. The forming area was set to the approximate center of one of the halves divided at the approximate center of the cut piece of the packaging material in the longitudinal direction (MD direction), and the longitudinal direction of the punch die was set to the TD direction of the packaging material.

By deep drawing under the above conditions, 10 samples were prepared and observed for (a) the presence or absence of pinholes and cracks and (b) the presence or absence of curling after deep drawing, and evaluated based on the following criteria.
(a) Presence or absence of pinholes and cracks
   A: No pinholes or cracks occurred in any of the samples.
   B: No pinholes or cracks occurred in 80% or more and less than 100% of the samples.
   C: No pinholes or cracks occurred in less than 80% of the samples.
(b) Presence or absence of curling after deep drawing
   A: A non-deep-drawn portion was not curled, or a non-deep-drawn portion was curled but a cylinder shape was not formed by the end portion of the non-deep-drawn portion.
   C: Anon-deep-drawn portion was curled so that a cylinder shape was formed by the end portion of the non-deep-drawn portion.

Based on the evaluation results on (a) and (b), the formability of the packaging material was determined according to the following criteria. The results are shown in Table 3.
A: Both the evaluation results on (a) and (b) were determined as "A".
B: The evaluation result on (a) was determined as " B", and the evaluation result on (b) was determined as "A".
C: At least one of the evaluation results on (a) and (b) was determined as "C".

### [Measurement of peel strength]

The packaging material obtained in each of Examples 3-1 to 3-3 and Comparative Examples 3-1 to 3-5 was cut into a size of a width of 15 mm and a length of 100 mm to prepare specimens. In the specimens, the peel strength between the substrate layer and the barrier layer in a 150°C environment was measured. The peel strength was measured by a T-peel test under conditions of a tensile speed of 50 mm/min using a tensile tester (manufactured by Shimadzu Corporation). From the obtained results, the peel strength in a 150°C environment was evaluated based on the following criteria. The results are shown in Table 3.
A: Peel strength was 1 N/15 mm or more.
C: Peel strength was less than 1 N/15 mm.

**[Table 3]**

| | Substrate layer | | | | Outer adhesive layer | Volume resistivity (Ω·m) | | | Volume resistivity × Substrate thickness (Ω·m × µm) | Dielectric breakdown voltage in 150°C environment | Formability | Peel strength in 150°C environm ent |
|---|---|---|---|---|---|---|---|---|---|---|---|---|
| | Material | Film forming method | Thickness (µm) | Tg (°C) | Material | 23°C environme nt | 150°C environme nt | Resistance change ratio | | | | |
| Example 3-1 | Semi-aromati c polyamide | Simultane ous biaxial stretching | 25 | 120 | Polyester urethane | 1 × 10¹⁴ to 8 × 10¹⁴ | 1 × 10¹³ to 6 × 10¹³ | 2 × 10⁰ to 8 × 10¹ | 2.5 × 10¹⁴ to 1.5 × 10¹⁵ | A | A | A |
| Example 3-2 | Semi-aromati c polyamide | Simultane ous biaxial stretching | 5 | 120 | Polyester urethane | 1 × 10¹⁴ to 8 × 10¹⁴ | 1 × 10¹³ to 6 × 10¹³ | 2 × 10⁰ to 8 × 10¹ | 5 × 10¹³ to 3 × 10¹⁴ | B | A | A |
| Example 3-3 | Semi-aromati c polyamide | Casting | 25 | 120 | Polyester urethane | 1 × 10¹⁴ to 8 × 10¹⁴ | 1 × 10¹³ to 6 × 10¹³ | 2 × 10⁰ to 8 × 10¹ | 2.5 × 10¹⁴ to 1.5 × 10¹⁵ | A | B | A |
| Comparative Example 3-1 | PET | Sequential biaxial stretching | 25 | 75 | Polyester urethane | 5 × 10¹⁴ to 2 × 10¹⁵ | 1 × 10¹¹ to 9 × 10¹¹ | 6 × 10³ to 1 × 10⁵ | 5 × 10¹² to 2 × 10¹³ | C | A | A |
| Comparative Example 3-2 | PET | Sequential biaxial stretching | 50 | 75 | Polyester urethane | 5 × 10¹⁴ to 2 × 10¹⁵ | 1 × 10¹¹ to 9 × 10¹¹ | 6 × 10³ to 1 × 10⁵ | 1 × 10¹³ to 4 × 10¹³ | C | C | A |
| Comparative Example 3-3 | PET | Sequential biaxial stretching | 25 | 75 | PO adhesive | 5 × 10¹⁴ to 2 × 10¹⁵ | 1 × 10¹¹ to 9 × 10¹¹ | 6 × 10³ to 1 × 10⁵ | 5 × 10 ¹² to 2 × 10¹³ | C | A | C |
| Comparative Example 3-4 | PBT | Tubular biaxial stretching | 25 | 60 | Polyester urethane | 3 × 10¹⁴ to 8 × 10¹⁴ | 2 × 10⁸ to 6 × 10⁸ | 5 × 10⁵ to 5 × 10⁶ | 5 × 10⁹ to 1.5 × 10¹⁰ | C | A | A |
| Comparative Example 3-5 | Nylon 6 | Sequential biaxial stretching | 25 | 47 | Polyester urethane | 1 × 10¹⁴ to 5 × 10¹⁴ | 1 × 10⁵ to 6 × 10⁵ | 2 × 10⁸ to 5 × 10⁹ | 2.5 × 10⁶ to 1.5 × 10⁷ | C | A | A |

### [Industrial Applicability]

The present disclosure provides a power storage device packaging material in which lifting of a substrate layer from a barrier layer is less likely to occur in a high temperature environment (e.g., 150°C), and a power storage device including the power storage device packaging material.

The present disclosure provides a power storage device in which deformation is less likely to occur even after the power storage device is used or stored in a high temperature environment (e.g., 150°C) for a long period of time, and a power storage device packaging material for the power storage device.

Furthermore, the present disclosure provides a power storage device packaging material in which dielectric breakdown is less likely to occur in a high temperature environment (e.g., 150°C), and a power storage device including the power storage device packaging material.

### [Reference Signs List]

- 10, 20: Power storage device packaging material
- 11: Substrate layer
- 12a: Outer adhesive layer
- 12b: Inner adhesive layer
- 13: Barrier layer
- 14a: First anticorrosion treatment layer
- 14b: Second anticorrosion treatment layer
- 15: Adhesive resin layer
- 16: Sealant layer
- 50: Power storage device
- 52: Battery element
- 53: Metal terminal

## Claims

1. A power storage device packaging material comprising: at least a substrate layer; an outer adhesive layer; a barrier layer; and a sealant layer in this order, wherein
a difference in linear expansion coefficient at 20 to 150°C between the substrate layer and the barrier layer is 20×10⁻⁶/°C or less in both an MD direction and a TD direction.

2. The power storage device packaging material according to claim 1, wherein
the linear expansion coefficient at 20 to 150°C of the substrate layer is -7×10⁻⁶/°C or more and 53×10⁻⁶/°C or less in both the MD direction and the TD direction.

3. A power storage device packaging material comprising: at least a substrate layer; an outer adhesive layer; a barrier layer; and a sealant layer in this order, wherein
the substrate layer has a single-layer structure, and when a sample with a length of 20 mm and a width of 10 mm is prepared from the substrate layer, and the sample is subjected to a creep test in which a constant load of 5 N is continuously applied to the sample in a 150°C environment for 3 hours, an amount of elongation of the sample in an MD direction and an amount of elongation of the sample in a TD direction are both 3 mm or less.

4. The power storage device packaging material according to claim 3, wherein
a difference between the amount of elongation of the sample in the MD direction and the amount of elongation of the sample in the TD direction is 2 mm or less.

5. A power storage device packaging material having a structure in which at least a substrate layer, an outer adhesive layer, a barrier layer, and a sealant layer are laminated in this order, wherein
a ratio between a volume resistivity in a 23°C environment and a volume resistivity in a 150°C environment, which is a volume resistivity in a 23°C environment/a volume resistivity in a 150°C environment, of the substrate layer is 1 × 10⁰ to 1 × 10³.

6. The power storage device packaging material according to claim 5, wherein
the volume resistivity in a 23°C environment of the substrate layer is 1 × 10¹³ Ω·m or more.

7. The power storage device packaging material according to claim 5 or 6, wherein
the volume resistivity in a 150°C environment of the substrate layer is 1 × 10¹² Ω·m or more.

8. The power storage device packaging material according to any one of claims 5 to 7, wherein
the substrate layer has a thickness of 35 µm or less, and
a value obtained by multiplying the volume resistivity in a 150°C environment of the substrate layer by the thickness of the substrate layer is 5 × 10¹³ Ω·m × µm or more.

9. The power storage device packaging material according to any one of claims 1 to 8, wherein
the barrier layer is an aluminum foil.

10. The power storage device packaging material according to any one of claims 1 to 9, wherein
the substrate layer is a biaxially stretched film.

11. The power storage device packaging material according to any one of claims 1 to 10, wherein
the substrate layer is a semi-aromatic polyamide film.

12. The power storage device packaging material according to any one of claims 1 to 11, wherein
the outer adhesive layer is a layer composed of a polyester urethane adhesive.

13. The power storage device packaging material according to any one of claims 1 to 12, wherein
the outer adhesive layer has a thickness of 1 to 10 µm.

14. The power storage device packaging material according to any one of claims 1 to 13, wherein
the power storage device packaging material is used for a solid-state battery.

15. A power storage device comprising:
a power storage device body;
a current output terminal that extends from the power storage device body; and
the power storage device packaging material according to any one of claims 1 to 14, the power storage device packaging material sandwiching the current output terminal and housing the power storage device body.

16. The power storage device according to claim 15, wherein
the power storage device is an all-solid-state battery.
